# FASCICULE DE BREVET EUROPEEN

(11) **EP 2 387 274 B1**
(45) Date de publication et mention de la délivrance du brevet: **05.10.2016**
(21) Numéro de dépôt: 11165590.8
(22) Date de dépôt: 10.05.2011
(51) Int. Cl.: H04W 40/22

(54) **Procédé et réseau à liaisons sans fil pour la localisation relative de mobiles**
Verfahren und mobiles Netzwerk zur relativen Lokalisierung von mobilen Knoten
Method for relative location of mobile nodes in a wireless network and its corresponding network

(30) Priorité: 11.05.2010 FR 1002004
(43) Date de publication de la demande: 16.11.2011
(73) Titulaire: Centre National d'Etudes Spatiales (C.N.E.S.), 75039 Paris Cedex 01 (FR)
(72) Inventeur: Verdier, Nicolas, 31410 Longages (FR); Lopez, Jean-Louis, 31130 Balma (FR)
(74) Mandataire: Cabinet BARRE LAFORGUE & associés

(56) Documents cités:
- WO-A1-2008/151242
- WO-A2-02/054646
- US-A1- 2002 181 428

## Description

L'invention concerne un procédé de localisation relative de mobiles dans une zone, dite zone d'évolution, à l'aide d'un réseau à liaisons sans fil susceptible d'être établi entre des dispositifs électroniques de communication, dits noeuds, et un réseau adapté en particulier pour mettre en oeuvre ce procédé.

L'invention concerne plus particulièrement un procédé de localisation relative de mobiles dans un réseau adapté pour la propagation de données de proche en proche entre les noeuds du réseau.

Un réseau composé de noeuds échangeant des données est dit large, si la dispersion potentielle des noeuds, notamment des noeuds portés par les mobiles, excède largement la portée de communication (sans fil) de chacun des noeuds. Dans un tel réseau, le procédé de communication entre les noeuds doit permettre la propagation des données de proche en proche.

Un tel procédé de communication permet l'échange de données depuis un noeud source émettant des données jusqu'à un noeud destination distant, les noeuds pouvant être non reliés et/ou hors de portée l'un de l'autre, par l'intermédiaire d'une chaîne de noeuds relais, reliés et/ou à portée de communication les uns des autres deux à deux, propageant les données de proche en proche jusqu'à atteindre le noeud destination.

Un tel procédé d'acheminement (aussi appelé procédé de routage) de données s'appuie sur une méthode de localisation relative des noeuds afin de déterminer le chemin optimal sur lequel orienter un message ; le chemin optimal étant celui qui permet à un message d'atteindre le noeud destination dans des conditions optimales.

La demande de brevet internationale non publiée PCT/FR 2009/052186 au nom de la demanderesse décrit un tel procédé de communication et un réseau mettant en oeuvre ce procédé. Ce document ne traite cependant pas la question de la localisation de mobiles à l'aide d'un tel réseau.

Le document « A Survey on Position-Based Routing in Mobile Ad Hoc Networks » Martin Mauve, et al., publié en novembre/décembre 2001 dans la revue IEEE Network, volume 15, expose des procédés de routage de données de proche en proche entre des noeuds distribués. Ces procédés sont basés sur l'utilisation de la position géographique des noeuds pour orienter le routage de données jusqu'à la destination souhaitée. Dans un premier temps, les noeuds acquièrent leur position géographique en utilisant un système de localisation, tel que par exemple le système GPS (Global Positioning System). Puis dans un deuxième temps, les noeuds échangent entre eux la connaissance de leur position géographique, afin de créer des tables de voisinage entre les noeuds. Enfin, un noeud source doit connaître la position géographique du noeud destination pour lui transmettre des données, de telle sorte que la propagation de données s'effectue de proche en proche par le meilleur chemin, grâce à l'insertion, dans les données à transmettre, de la position géographique du noeud destination. L'un des procédés consiste à propager les données, le plus possible dans la direction de la destination. Ces procédés ne peuvent donc fonctionner que si les noeuds sont tous équipés d'un système de localisation absolue.

Le document «Beacon Vector Routing : Scalable Point-to-Point Routing in Wireless Sensornets » Fonseca et al XP002408361 décrit un protocole de routage par utilisation de balises (« beacons ») définies aléatoirement au sein des différents noeuds, et par des arbres de routage définis entre chaque noeud du réseau et les différentes balises. L'algorithme (cf. en particulier section 3 pages 331-332) définit, pour chaque noeud, un jeu de coordonnées par rapport au jeu de balises et une fonction de distance. Ainsi, chaque noeud connaît sa distance, en sauts, par rapport à chaque balise, et les coordonnées d'un noeud sont concrétisées par un vecteur comprenant l'ensemble des différentes distances. Les noeuds doivent connaître les positions de leurs voisins de façon à permettre l'optimisation du routage par le noeud racine. Pour ce faire, les différents noeuds doivent envoyer périodiquement des messages contenant leurs coordonnées. Il s'agit donc, là encore d'un système basé sur la localisation des noeuds par des coordonnées virtuelles. Ce document ne traite cependant pas de la localisation relative des noeuds dans le réseau.

Un autre exemple de l'art antérieur se trouve dans WO02/054646. Par ailleurs, la localisation de mobiles réalisée par utilisation d'un système de localisation par satellite (par exemple de type GPS) suppose que chaque mobile puisse effectivement accéder à la communication via les satellites de localisation. Outre son coût, il existe de nombreuses situations dans lesquelles des mobiles devant être localisés ne peuvent pas accéder à de tels satellites : zones urbaines, à l'intérieur de bâtiments, zones désertiques ou isolées, zones spatiales...

Or, les inventeurs ont déterminé qu'en pratique le problème de la localisation de mobiles concerne le plus souvent une localisation relative consistant à déterminer au moins approximativement et au moins de temps en temps, la localisation des différents mobiles les uns par rapport aux autres et/ou par rapport à au moins un autre noeud du réseau, sans qu'il soit nécessaire en réalité de déterminer la géo localisation absolue de chaque mobile.

La localisation relative de mobiles dans une zone d'évolution via un réseau sans fil peut être réalisée de différentes manières, par exemple par triangulation. Néanmoins, les procédés connus de localisation relative présentent l'inconvénient de nécessiter des échanges quasi permanents (synchrones) de messages et/ou de données entre les différents mobiles, ce qui implique de pouvoir disposer d'une source d'énergie embarquée importante et continue. En outre, de tels échanges synchrones sont susceptibles d'être interceptés, ce qui peut poser des problèmes de sécurité. De même, en cas de défaillance d'une liaison sans fil, la localisation est perdue, de sorte qu'une telle solution est peu robuste.

US 2002/0181428 décrit une méthode et un système pour l'organisation d'un système de communication procurant un accès sans fil à un réseau filaire LAN avec une optimisation de la bande passante et une amélioration de la qualité de service. Ce document ne vise pas la localisation de mobiles dans une zone d'évolution, et ne fournit pas un procédé et un réseau permettant une telle localisation. WO 02/054646 décrit également un procédé et un système pour procurer un protocole de routage pour des dispositifs sans fil, mais ne vise pas non plus la localisation de mobiles dans une zone d'évolution. En particulier, dans ces documents, les messages contenant un compteur de sauts sont systématiquement réémis par tous les noeuds avec incrémentation du compteur de sauts, de sorte que la valeur du compteur de sauts n'est pas représentative d'une localisation des noeuds dans une zone d'évolution de ces derniers, notion qui n'est d'ailleurs pas connue de ces documents.

Il subsiste donc un besoin pour un procédé de localisation relative de mobiles dans une zone d'évolution de ces derniers, via un réseau sans fil, qui soit simple, efficace, économique, autonome, robuste, sûr, générique et puisse être multipoints. Un procédé de localisation relative dans un réseau de mobiles est : simple, s'il nécessite peu d'opérations de traitement de données à effectuer par des noeuds ; efficace, si les données de localisation parviennent rapidement à destination, avec un minimum de transmissions dupliquées, y compris en cas de perte locale de communication entre une paire de noeuds ; économique, s'il est adapté pour des réseaux de capteurs à faible coût et à faible autonomie d'énergie ; autonome, s'il est capable de fonctionner indépendamment de toute infrastructure externe au réseau, c'est-à-dire à partir des seuls noeuds et mobiles ; robuste, s'il peut continuer à fonctionner malgré des modifications imprévisibles de la topologie du réseau, et si peu de messages n'arrivent jamais à destination ; sûr s'il est peu sensible aux attaques et aux tentatives d'interception des communications de la part de tiers ; générique, si le routage ne nécessite ni un système de localisation géographique de chaque noeud, ni un traitement numérique complexe au niveau de chaque noeud ; multipoints si les données peuvent être transmises à une pluralité de noeuds collecteurs distincts.

L'invention vise à procurer ces avantages et à fournir un procédé de localisation relative dans une zone d'évolution de mobiles reliés par des liaisons sans fil dans un réseau compatible avec de faibles ressources énergétiques et en traitement de données embarquées par les mobiles, pouvant être déployé en tout endroit de l'espace (en ce compris toute zone (ouverte ou fermée, par exemple à l'intérieur d'un bâtiment) de la surface terrestre ou d'une planète), assurant une grande sécurité et une grande robustesse de fonctionnement, et pouvant faire l'objet de très nombreuses applications différentes.

L'invention vise également à fournir un réseau de mobiles permettant la mise en oeuvre de ce procédé.

L'invention vise en particulier à proposer un tel procédé et un tel réseau pouvant faire l'objet de nombreuses applications différentes, et plus particulièrement qui soient compatibles avec une très faible consommation d'énergie de chaque noeud, par exemple en permettant une grande durée de vie du réseau avec des noeuds uniquement alimentés par batteries d'accumulateurs ou piles de faibles capacités.

L'invention vise également à proposer un tel procédé et un tel réseau qui peuvent être dédiés à la localisation des mobiles dans une zone d'évolution, à l'exclusion de toute autre transmission d'informations entre les mobiles. L'invention vise cependant également à proposer un tel procédé est un tel réseau qui peuvent permettre la communication d'autres informations entre les mobiles, selon les applications et les besoins.

Pour ce faire, l'invention concerne un procédé de localisation relative de mobiles dans une zone, dite zone d'évolution, dans laquelle les mobiles sont susceptibles d'évoluer, à l'aide d'un réseau à liaisons sans fil susceptible d'être établi entre des dispositifs électroniques de communication, dits noeuds, chaque mobile étant doté d'un dispositif électronique de communication, dit noeud de mobile, caractérisé en ce que :
- chaque noeud est adapté pour pouvoir émettre et recevoir des messages sur le réseau par liaisons sans fil,
- chaque noeud comporte un module de traitement adapté pour pouvoir interpréter et modifier un message reçu,
- au moins un noeud, dit noeud fixe, est fixé dans ladite zone d'évolution, chaque noeud fixe étant adapté pour présenter une portée en réception inférieure à ladite zone d'évolution,
- chaque noeud de mobile présente une portée en réception inférieure ou égale, de préférence strictement inférieure, à la portée en réception de chaque noeud fixe,
- au moins un noeud fixe, dit noeud collecteur, étant adapté pour générer et émettre un message, dit message de gestion, diffusé de proche en proche par les noeuds, chaque message de gestion comportant un champ numérique, dit champ de rang,
- le module de traitement d'un noeud recevant un message de gestion est adapté pour comparer la valeur du champ de rang du message avec une valeur numérique mémorisée dans une mémoire numérique du noeud, dite mémoire de rang,
- si la valeur contenue dans la mémoire de rang correspond à au moins une valeur prédéterminée, dite valeur indéfinie, alors le module de traitement incrémente le contenu du champ de rang, met à jour le contenu de la mémoire de rang avec le contenu du champ de rang incrémenté, et retransmet le message de gestion,
- le module de traitement d'un noeud recevant un message de gestion est adapté pour, si la valeur contenue dans la mémoire de rang appartient à l'ensemble formé des valeurs supérieures au contenu du champ de rang, incrémenter le contenu du champ de rang, mettre à jour le contenu de la mémoire de rang avec le contenu du champ de rang incrémenté, et retransmettre le message de gestion,
- le module de traitement d'un noeud recevant un message de gestion est adapté pour ignorer le message de gestion, si la valeur contenue dans la mémoire de rang appartient à l'ensemble formé des valeurs inférieures au contenu du champ de rang,
- au moins un message de localisation est émis à partir d'un noeud source à destination d'au moins un noeud collecteur via une série de noeuds de rangs successifs générés par diffusion préalable d'un message de gestion à partir dudit noeud collecteur jusqu'audit noeud source, ce message de localisation contenant des données, dites données de localisation, comprenant au moins un code d'identification individuelle et/ou collective de chaque noeud par lequel il transite depuis ledit noeud source, jusqu'audit noeud collecteur, et la valeur de rang, contenue dans la mémoire de rang de ce noeud, par rapport audit noeud collecteur, l'émission de chaque message de localisation étant adaptée pour que les données de localisation de chaque noeud de mobile appartenant au réseau soient transmises à au moins un noeud collecteur.

Ainsi, le message de localisation concatène, à partir d'un noeud source, l'identification individuelle et/ou collective et le rang de chaque noeud appartenant au chemin de routage établi préalablement par la diffusion du message de gestion entre ledit noeud source et ledit noeud collecteur. Dès lors, ce noeud collecteur recueille ces données de localisation du message de localisation pour l'ensemble des différents noeuds par lesquels le message de localisation a transité, et centralise donc les données de localisation des différents noeuds ayant préalablement reçu un message de gestion émis par ce noeud collecteur.

Dans un procédé selon l'invention, la valeur de rang de chacun des noeuds définissant un chemin de routage par diffusion d'un message de gestion à partir d'un noeud collecteur constitue une donnée de localisation relative des noeuds mobiles les uns par rapport aux autres dans la zone d'évolution, dans la mesure où la distance maximum entre deux noeuds qui sont à portée l'un de l'autre par liaison sans fil sont à une distance maximum l'un de l'autre correspondant à la portée maximum de cette liaison sans fil. En conséquence, la connaissance de cette valeur de rang pour différents noeuds détermine une topologie estimative de localisation relative de ces différents noeuds. En outre, la variation des valeurs de rang procure également des renseignements sur l'évolution de cette topologie.

Par exemple, si la valeur de rang d'un noeud de mobile diminue, on peut supposer que le mobile correspondant se rapproche du noeud collecteur. À l'inverse, si la valeur de rang d'un noeud de mobile augmente, on peut supposer que le mobile correspondant s'éloigne du noeud collecteur. Également, si la valeur de rang d'un noeud de mobile s'interpose entre les valeurs de rang de deux autres noeuds du réseau, on peut supposer que le mobile se déplace entre ces deux autres noeuds. D'autres informations de localisation relative peuvent être déduites de ces données de localisation relative reçues à chaque noeud collecteur. Les différents noeuds collecteurs d'un même réseau peuvent être eux-mêmes reliés entre eux par une liaison sans fil ou par une liaison filaire de façon à centraliser l'ensemble des données de localisation qu'ils reçoivent, par exemple dans une base de données associée à un système informatique de traitement numérique de ces données pouvant être adapté en particulier pour générer des informations de topologie, déclencher et/ou émettre des signaux d'informations ou d'alerte etc., à partir des données de localisation.

Par ailleurs, chaque noeud -et notamment chaque noeud collecteur- étant adapté pour présenter une portée en réception inférieure à ladite zone d'évolution, dans laquelle les mobiles sont susceptibles d'évoluer, les données de localisation relative permettent de déterminer la topologie des différents noeuds du réseau par rapport à cette zone d'évolution. Par exemple, il est possible de déterminer si un noeud sort ou non d'une telle zone d'évolution.

Une telle zone d'évolution est une zone d'espace prédéterminée qui peut être fixe (par exemple une cour d'école, les mobiles étant des terminaux portés par des élèves dont on veut s'assurer la présence de dans la cour ; une pièce d'un bâtiment ou des zones de rangement d'une pièce, les mobiles dans des terminaux portés par des objets dont on veut s'assurer la présence dans la pièce ou dans une zone de la pièce, l'invention permettant d'obtenir une information sur la localisation de l'objet dans cette zone ; une zone de pâturages, les mobiles étant des terminaux portés par des animaux dont on veut s'assurer la présence dans la zone de pâturages ; une zone de parking de véhicules constituant les mobiles, l'invention permettant d'obtenir une information sur l'état de remplissage de parkings...). Selon l'invention, la zone d'évolution, qui est une zone d'espace prédéterminée, peut au contraire être une zone d'évolution géographiquement elle-même mobile (par exemple un périmètre à partir d'un terminal collecteur porté par une personne, un animal ou un véhicule en déplacement, l'invention permettant d'obtenir des informations sur la présence ou non d'autres mobiles autour de ce terminal collecteur (cas par exemple d'un groupe d'animaux en pâturage libre en troupeau dont on veut contrôler cependant le bon rassemblement, pour détecter éventuellement la perte de l'un ou plusieurs des individus du troupeau ; ou d'un groupe de personnes telles que des randonneurs ; ou d'un groupe de navires, d'aéronefs, de véhicules tout-terrain...).

En outre, avantageusement et selon l'invention au moins un noeud fixe -notamment un noeud fixe qui n'est pas lui-même un noeud collecteur-, est placé dans la zone d'évolution dans la zone de portée en réception d'au moins un noeud collecteur. Ainsi, l'invention permet de localiser les noeuds mobiles par rapport à ce noeud fixe non collecteur et par rapport au noeud collecteur. De préférence, avantageusement et selon l'invention, la zone d'évolution est dotée d'une pluralité de noeuds fixes répartis dans cette zone d'évolution pour la couvrir de façon optimale. Ainsi, il est possible de localiser précisément chaque noeud mobile dans la zone d'évolution. Cela étant, il convient également d'écarter suffisamment les noeuds fixes les uns des autres afin d'éviter un trop grand nombre de noeuds fixes à portée les uns des autres, ce qui nuirait à la précision de la localisation.

Dans un mode de réalisation particulièrement avantageux, la zone d'évolution est une zone d'évolution bidimensionnelle et est dotée d'une pluralité de noeuds fixes -notamment une pluralité de noeuds fixes non collecteurs-répartis de sorte que chaque noeud fixe présente une portée en réception limitée pour couvrir au maximum quatre autres noeuds fixes adjacents situés dans la zone d'évolution.

Ainsi, l'invention permet de localiser les noeuds mobiles par rapport à chaque noeud fixe, dont la localisation dans la zone d'évolution est elle-même connue. Par exemple, si la zone d'évolution est une cour d'école, un noeud fixe non collecteur peut être placé dans chaque classe de l'école, et un noeud collecteur peut être placé au niveau d'un bâtiment d'administration, permettant de localiser les élèves par rapport à chaque classe de l'école. Dans un autre exemple, si la zone d'évolution est une zone de parking, un noeud fixe non collecteur peut être placé en regard de chaque place de parking (ou de chaque groupe de places de parking), avec une portée correspondant au maximum aux places de parking adjacentes (ou aux groupes de places de parking adjacents), permettant de localiser les noeuds mobiles, qui peuvent être par exemple des véhicules, par rapport à chaque place de parking (ou par rapport à chaque groupe de places de parking).

Plus particulièrement, avantageusement et selon l'invention, les noeuds fixes -notamment les noeuds fixes non collecteurs- sont répartis de façon à former au moins une succession linéaire (droite ou non) de noeuds fixes et à présenter, pour chaque succession linéaire de noeuds fixes, une portée en réception limitée pour couvrir au maximum deux autres noeuds fixes adjacents de ladite succession linéaire. En pratique, avantageusement, chaque succession linéaire de noeuds fixes peut correspondre à une direction droite de la zone d'évolution.

Si la zone d'évolution est bidimensionnelle, ce qui est le cas le plus courant pour la localisation de mobiles dans une zone géographique, il est possible de prévoir une succession linéaire selon des directions droites de la zone d'évolution non parallèles entre elles, ces directions droites permettant la localisation des mobiles dans toute la zone d'évolution. Par exemple, dans le cas d'une cour d'école carrée, il est possible de prévoir une succession linéaire de noeuds fixes le long de deux côtés orthogonaux de ladite cour d'école. Un noeud collecteur peut être placé à l'angle de jonction de ces deux côtés orthogonaux. La zone d'évolution peut être monodimensionnelle, par exemple dans le cas d'une rue dans laquelle les places de parking se succèdent le long de la rue, ladite succession linéaire correspondant aux différentes places de parking le long de la rue.

De préférence, avantageusement et selon l'invention, la zone d'évolution est dotée d'une pluralité de noeuds fixes répartis de sorte que la zone d'évolution est totalement couverte par l'enveloppe des portées de réception des noeuds fixes. En outre, en général, il est possible de ne prévoir qu'un seul noeud collecteur dans la zone d'évolution, ce noeud collecteur centralisant l'intégralité des données de localisation issues des différents noeuds mobiles, ainsi que celles des noeuds fixes.

Avantageusement et selon l'invention, ledit noeud source est choisi parmi : un noeud destinataire identifié dans ledit message de gestion ; un noeud terminal à partir duquel ledit message de gestion cesse d'être diffusé, aucun noeud à portée de ce noeud terminal ayant une valeur contenue dans sa mémoire de rang correspondant à une valeur indéfinie ou appartenant à l'ensemble des valeurs supérieures au champ de rang dudit message de gestion ; chaque noeud dont la valeur de mémoire de rang a été précédemment modifiée. Ainsi, dans un procédé selon l'invention, différentes variantes sont envisageables pour le déclenchement de la diffusion d'un message de localisation, en vue de la mise à jour des données de localisation correspondantes dans chaque noeud collecteur. Dans les deux premiers cas mentionnés ci-dessus, ce déclenchement résulte de la fin de la diffusion d'un message de gestion, correspondant à l'établissement d'un chemin de routage optimal entre eux les différents noeuds à partir d'un noeud collecteur. Cette fin de diffusion peut être déterminée par le fait que le message de gestion a atteint un noeud destinataire prédéterminé par un noeud collecteur, ou, au contraire, automatiquement, par le fait que le message de gestion cesse d'être diffusé.

Dans le troisième cas susmentionné, le module de traitement de chaque noeud, notamment de chaque noeud de mobile, est adapté pour, au moins après chaque modification d'un contenu de sa mémoire de rang (par incrémentation et avant retransmission d'un message de gestion), émettre un message de localisation à destination de chaque noeud collecteur pour lequel sa mémoire de rang contient une valeur de rang qui a été modifiée.

Plus particulièrement, avantageusement et selon l'invention, le module de traitement de chaque noeud est adapté pour, au moins après chaque modification d'un contenu de la mémoire de rang, émettre un message de données à destination de chaque noeud collecteur pour lequel sa mémoire de rang contient une valeur de rang -c'est-à-dire pour lequel il est en relation via un chemin de routage établi par diffusion préalable d'un message de gestion-, ce message de données contenant au moins un code d'identification individuelle et/ou collective du noeud, et la valeur de rang, contenue dans la mémoire de rang du noeud, par rapport audit noeud collecteur.

Ledit code d'identification peut être un code d'identification individuelle lorsqu'il est propre à chaque noeud et différent pour les différents noeuds du réseau. Ledit code d'identification peut être un code d'identification collective lorsqu'il est commun à plusieurs noeuds du réseau, c'est-à-dire permet notamment d'identifier un groupe de mobiles (par exemple tous les élèves d'une classe d'un collège).

Par ailleurs, la précision de la localisation peut être améliorée en imposant une modification de rang dans le cas où la valeur du champ de rang d'un message de gestion reçu par un noeud et la valeur de la mémoire de rang de ce noeud sont égales, en définissant un chemin de routage optimal à partir d'au moins un paramètre représentatif de la qualité de transmission entre les noeuds, cette qualité de transmission entre deux noeuds étant elle-même représentative de la distance entre ces noeuds.

Ainsi, un procédé selon l'invention est aussi avantageusement caractérisé en ce que :
- chaque noeud comprend un dispositif de mesure d'au moins un paramètre représentatif de la qualité de la transmission de chaque message qu'il reçoit, ce dispositif de mesure générant au moins une valeur, dite valeur de qualité de transmission,
- lorsqu'un noeud reçoit un message de gestion dont la valeur de champ de rang est égale à celle de la mémoire de rang, le module de traitement est adapté pour :
   - comparer chaque valeur de qualité de transmission correspondant à ce message de gestion avec au moins un critère prédéterminé choisi de façon à détecter une amélioration prédéterminée de la qualité de transmission,
   - si une telle amélioration est détectée, incrémenter le contenu du champ de rang, mettre à jour le contenu de la mémoire de rang avec le contenu du champ de rang incrémenté, et retransmettre le message) de gestion. Différentes variantes sont envisageables pour déterminer chaque critère permettant de détecter une amélioration de la qualité de transmission. Avantageusement et selon l'invention chaque valeur de qualité de transmission correspondant à un message reçu est mémorisée dans une mémoire du noeud, et le module de traitement est adapté pour comparer chaque valeur de qualité de transmission correspondant à un message de gestion reçu avec la valeur de qualité de transmission préalablement mémorisée et, si le résultat de cette comparaison est représentatif d'une différence de valeurs supérieure à une valeur seuil prédéterminée correspondant à une amélioration prédéterminée de la qualité de transmission, incrémenter le contenu du champ de rang, mettre à jour le contenu de la mémoire de rang avec le contenu du champ de rang incrémenté, et retransmettre le message de gestion.

Dans une première variante possible de l'invention, la qualité de transmission est estimée par la durée de la transmission d'un message de gestion entre deux noeuds. Dans cette variante, avantageusement et selon l'invention, le module de traitement de chaque noeud est adapté pour :
- incorporer dans chaque message de gestion qu'il émet, un champ numérique, dit instant d'émission, correspondant à l'instant auquel il émet le message de gestion,
- déterminer l'instant de réception de chaque message de gestion qu'il reçoit dont la valeur de champ de rang est égale à celle de la mémoire de rang, et le comparer à l'instant d'émission incorporé dans le message de gestion,
- si le résultat de cette comparaison est représentatif d'une différence temporelle, représentative d'une durée de transmission, inférieure à une valeur de comparaison, incrémenter le contenu du champ de rang, mettre à jour le contenu de la mémoire de rang avec le contenu du champ de rang incrémenté, et retransmettre le message de gestion. Ladite valeur de comparaison peut être une valeur fixe prédéterminée (permettant d'assurer l'établissement d'un chemin de routage avec une qualité de transmission suffisante). Néanmoins, de préférence, avantageusement et selon l'invention, ladite valeur de comparaison correspond à la durée de transmission mémorisée du précédent message de gestion reçu diminuée d'une valeur seuil prédéterminée.

Dans une deuxième variante possible de l'invention, la qualité de transmission est estimée par le niveau des signaux reçus par les différents noeuds et correspondant à la réception d'un message de gestion. Dans cette variante, avantageusement et selon l'invention, chaque noeud comprend un dispositif de mesure du niveau de signal de réception de chaque message qu'il reçoit, et lorsqu'un noeud reçoit un message de gestion dont la valeur de champ de rang est égale à celle de la mémoire de rang, le module de traitement est adapté pour comparer le niveau du signal de réception avec une valeur prédéterminée, dite valeur de comparaison, puis, si le résultat de cette comparaison est représentatif d'une différence de niveaux supérieure à une valeur seuil, incrémenter le contenu du champ de rang, mettre à jour le contenu de la mémoire de rang avec le contenu du champ de rang incrémenté, et retransmettre le message de gestion. Là encore, ladite valeur de comparaison peut être une valeur fixe prédéterminée. Néanmoins, de préférence, avantageusement et selon l'invention, ladite valeur de comparaison est le niveau mémorisé du signal de réception du précédent message reçu.

L'invention s'étend également à un réseau à liaisons sans fil permettant la localisation relative de mobiles par la mise en oeuvre d'un procédé selon l'invention,

L'invention concerne donc également un réseau à liaisons sans fil permettant la localisation relative de mobiles dans une zone, dite zone d'évolution, dans laquelle les mobiles sont susceptibles d'évoluer, ledit réseau étant susceptible d'être établi entre des dispositifs électroniques de communication, dits noeuds, chaque mobile étant doté d'un dispositif électronique de communication, dit noeud de mobile, caractérisé en ce que :
- chaque noeud comprend un émetteur et un récepteur de messages sur le réseau par liaisons sans fil,
- chaque noeud comprend un module de traitement adapté pour pouvoir interpréter et modifier un message reçu,
- au moins un noeud, dit noeud fixe, est fixé dans ladite zone d'évolution, chaque noeud fixe étant adapté pour présenter une portée en réception inférieure à ladite zone d'évolution,
- chaque noeud de mobile présente une portée en réception inférieure ou égale, de préférence strictement inférieure, à la portée en réception de chaque noeud fixe,
- au moins un noeud fixe, dit noeud collecteur, étant adapté pour générer et émettre un message, dit message de gestion, diffusé de proche en proche par les noeuds, chaque message de gestion comportant un champ numérique, dit champ de rang,
- le module de traitement d'un noeud de mobile recevant un message de gestion est adapté pour comparer la valeur du champ de rang du message avec une valeur numérique mémorisée dans une mémoire numérique du noeud, dite mémoire de rang,
- si la valeur contenue dans la mémoire de rang correspond à au moins une valeur prédéterminée, dite valeur indéfinie, alors le module de traitement est adapté pour incrémenter la valeur du champ de rang, mettre à jour le contenu de la mémoire de rang avec le contenu du champ de rang incrémenté, et retransmettre le message de gestion,
- le module de traitement d'un noeud recevant un message de gestion est adapté pour, si la valeur contenue dans la mémoire de rang appartient à l'ensemble formé des valeurs supérieures au contenu du champ de rang, incrémenter le contenu du champ de rang, mettre à jour le contenu de la mémoire de rang avec le contenu du champ de rang incrémenté, et retransmettre le message de gestion,
- le module de traitement d'un noeud recevant un message de gestion est adapté pour ignorer le message de gestion, si la valeur contenue dans la mémoire de rang appartient à l'ensemble formé des valeurs inférieures au contenu du champ de rang,
- le module de traitement d'au moins un noeud, dit noeud source, est adapté pour générer et émettre, à destination d'au moins un noeud collecteur via une série de noeuds de rangs successifs générés par diffusion préalable d'un message de gestion à partir dudit noeud collecteur jusqu'audit noeud source, un message de localisation contenant des données, dites données de localisation, comprenant au moins un code d'identification individuelle et/ou collective de chaque noeud par lequel il transite depuis ledit noeud source, jusqu'audit noeud collecteur, et la valeur de rang, contenue dans la mémoire de rang de ce noeud, par rapport audit noeud collecteur, l'émission de chaque message de localisation étant adaptée pour que les données de localisation de chaque noeud de mobile appartenant au réseau soient transmises à au moins un noeud collecteur.

Avantageusement, un réseau selon l'invention est aussi caractérisé par tout ou partie des caractéristiques mentionnées ci-dessus en relation avec un procédé selon l'invention. Le réseau selon l'invention est adapté pour la mise en oeuvre du procédé selon l'invention. Autrement dit, le procédé selon l'invention est mis en oeuvre dans un réseau selon l'invention.

Par ailleurs, avantageusement et selon l'invention, le module de traitement de chaque noeud collecteur est adapté pour incorporer dans chaque message de gestion qu'il émet, un champ numérique, dit champ d'identifiant de session, dont la valeur est modifiée, pour chaque message de gestion émis par un même noeud collecteur, suivant une relation d'ordre prédéterminée et connue des noeuds (c'est-à-dire représentée par des données enregistrées dans chaque noeud).

Dans un procédé et un réseau selon l'invention, la diffusion de messages de gestion, puis de messages localisation, de proche en proche présente l'avantage d'être composée d'actions simples et donc rapides et économiques à exécuter par chaque noeud. De plus, un noeud n'a pas besoin d'avoir la connaissance complète du chemin qui le relie avec le noeud collecteur, ni de la cartographie de ses noeuds voisins, mais il suffit qu'il fasse partie d'une chaîne de noeuds reliés et/ou à portée les uns des autres deux à deux pour pouvoir transmettre des messages de localisation au noeud collecteur. L'invention permet de relier automatiquement sans système de positionnement du type GPS ni système de coordonnées virtuelles, ni balises intermédiaires références pour un tel système, ni traitement numérique complexe, des noeuds considérés comme les plus proches les uns des autres, via un chemin optimisé considéré comme le plus court chemin possible. L'invention permet, avec ces mêmes avantages, de déterminer une localisation relative relativement précise des différents noeuds les uns par rapport aux autres. Les messages de localisation à destination d'un (ou plusieurs) noeud(s) collecteur(s) circulent de noeud en noeud le long d'un chemin de routage et convergent vers chaque noeud collecteur. En outre un procédé et un réseau selon l'invention fonctionnent sans que les noeuds n'aient besoin de recevoir et prendre en compte la position géographique de chaque noeud collecteur destinataire des messages.

La mise à jour (notamment périodique) des chemins de routage rendue possible grâce à l'utilisation des identifiants de session est particulièrement avantageuse dans le cas de réseaux à topologie variable au cours du temps pour s'assurer que les chemins sont toujours valides et ce, de façon simple, sans risque d'erreur, d'ambiguïté ou d'incohérence. La fréquence optimale de mise à jour des chemins de routage est choisie en fonction de la dynamique de mobilité des noeuds afin d'éviter d'initier des messages de gestion plus souvent que nécessaire. En outre l'utilisation d'un champ d'identifiant de session permet de rendre l'invention compatible avec l'utilisation simultanée d'une pluralité de noeuds collecteurs, et permet également la propagation dynamique de l'indication d'une invalidité d'une portion de chemin de routage lors de la transmission des données de localisation depuis chaque noeud source vers chaque noeud collecteur. La valeur de ce champ d'identifiant de session est modifiée pour chaque message de gestion émis par les noeuds collecteurs, et est la même pour tous les noeuds collecteurs émettant un message de gestion correspondant à la même session.

Avantageusement et selon l'invention, le module de traitement d'un noeud est adapté pour enregistrer une valeur indéfinie dans sa mémoire de rang dès lors qu'il reçoit un message de gestion dont le champ d'identifiant de session contient une valeur numérique postérieure (d'ordre plus élevé) à celle du précédent message de gestion reçu. Ainsi, un noeud collecteur initiateur d'un message de gestion peut, en modifiant la valeur du champ d'identifiant de session contenue dans le message, imposer aux noeuds récepteurs une mise à jour des rangs et donc des chemins de routage qui mènent à ce noeud collecteur. Une telle valeur indéfinie peut être enregistrée dans une mémoire permanente du noeud à sa fabrication (par exemple valeur maximum de la mémoire de rang du noeud).

Avantageusement et selon l'invention, chaque noeud collecteur est adapté pour inclure un identifiant de ce noeud collecteur dans chaque nouveau message de gestion qu'il initie. Avantageusement et selon l'invention, le réseau comprend une pluralité de noeuds collecteurs, chacun comprenant un code numérique d'identification, dit identifiant de noeud collecteur, qui lui est propre, enregistré dans une mémoire permanente de ce noeud collecteur, ce noeud collecteur étant adapté pour inclure cet identifiant de noeud collecteur dans chaque message de gestion qu'il initie. Déployer plusieurs noeuds collecteurs permet d'augmenter le nombre de points de collecte des messages en provenance des autres noeuds, et donc d'étendre la superficie du réseau. Les différents noeuds collecteurs peuvent être reliés par une liaison spécifique (filaire ou non) en communication permanente les uns avec les autres et/ou avec une station centrale et/ou régulièrement visités pour la collecte des données qu'ils reçoivent.

Avantageusement et selon l'invention, le module de traitement d'un noeud mémorise dans une mémoire numérique du noeud, dite mémoire d'identifiant de noeud collecteur, l'identifiant de noeud d'un noeud collecteur dont un message de gestion qu'il a reçu a entraîné la mise à jour de sa mémoire de rang avec la plus petite valeur de rang. Dans l'intervalle entre la réception de deux messages de gestion, chaque noeud envoie donc des messages de localisation à un unique noeud collecteur. Il y a donc autant de sous-réseaux (ou branches du réseau) qu'il y a de noeuds collecteurs.

Avantageusement et selon l'invention, chaque noeud comprend un code numérique d'identification, dit identifiant de noeud, qui lui est propre, enregistré dans une mémoire permanente de ce noeud, et chaque message de gestion comporte un champ numérique, dit champ d'identifiant de noeud émetteur, dans lequel est enregistré au moins l'identifiant de noeud du noeud ayant émis ce message en dernier, où, en variante, l'identifiant de chacun des noeuds ayant réémis ce message de gestion.

Avantageusement et selon l'invention, le module de traitement d'un noeud, dit noeud récepteur, ayant reçu un message de gestion ayant entraîné la mise à jour de sa mémoire de rang, est adapté pour mémoriser la valeur du champ d'identifiant du dernier noeud émetteur -ou en variante de chacun des noeuds émetteurs- de ce message de gestion dans une mémoire numérique du noeud récepteur, dite mémoire d'identifiant de noeud le plus proche, et remplace ou incorpore le contenu de ce champ dans ce message de gestion par l'identifiant de noeud du noeud récepteur, puis retransmet le message de gestion. La mémorisation de l'identifiant de noeud correspondant au moins au noeud immédiatement précédent dans la chaîne de transmission permet, le cas échéant, d'éviter de renvoyer un message directement au noeud précédent (qui peut être le plus proche voisin sur le plus court chemin menant à un noeud collecteur), réduisant ainsi les duplications de messages.

Avantageusement dans une variante possible selon l'invention, chaque message de gestion contient un champ numérique, dit champ d'identifiant de destinataire(s), contenant au moins un identifiant de noeud d'un noeud destinataire du message de gestion.

Dans cette variante, avantageusement et selon l'invention, le module de traitement d'un noeud récepteur d'un message de gestion compare chaque valeur du champ d'identifiant de destinataire(s) avec son identifiant de noeud, et le module de traitement est adapté pour accéder à un contenu réservé du message de gestion si et seulement si l'identifiant de noeud correspond à la valeur du champ d'identifiant de destinataire(s). Le procédé selon l'invention peut être ainsi adapté pour inclure dans un message de gestion du contenu réservé à un noeud en particulier ou à un groupe de noeuds (tous identifiés individuellement ou collectivement dans le champ d'identifiant de destinataire(s)). Ainsi, tous les noeuds récepteurs du message mais non destinataires du message, ignorent son contenu réservé. Un tel contenu réservé peut par exemple consister à empêcher la retransmission du message de gestion ou à forcer sa retransmission.

Bien que cela ne soit pas indispensable, rien n'empêche de prévoir dans une variante conforme à l'invention, que chaque message de gestion soit en outre adapté pour pouvoir véhiculer des données supplémentaires à lire par au moins un noeud. En particulier, chaque message de gestion peut être adapté pour pouvoir véhiculer au moins une commande à exécuter par au moins un noeud, par exemple une commande de restitution d'informations concernant des paramètres du noeud (par exemple le délai maximum d'attente d'émission d'un message de gestion, les délais maximums d'attente d'émission et de réémissions d'un message de localisation, ...).

Avantageusement et selon un premier mode de réalisation préférentiel de l'invention, le module de traitement de chaque noeud source est adapté pour incorporer dans les messages de localisation un identifiant de noeud collecteur mémorisé dans une mémoire du noeud source. De la sorte, chaque noeud source émet des messages de localisation à destination du noeud collecteur dont il a mémorisé l'identifiant de noeud collecteur.

Avantageusement et selon un deuxième mode de réalisation de l'invention, chaque message de localisation est transmis de proche en proche à l'aide d'un champ numérique, dit champ de rang, que ce message de localisation contient. Le module de traitement de tout noeud recevant un message de localisation, compare la valeur contenue dans le champ de rang avec celle contenue dans sa mémoire de rang, met à jour le champ de rang avec le contenu de sa mémoire de rang et retransmet le message si la valeur contenue dans la mémoire de rang est inférieure à celle contenue dans le champ de rang. Ce deuxième mode de mise en oeuvre du procédé d'acheminement des messages de localisation, basé sur les valeurs de rangs des noeuds, permet de fiabiliser la réception des données aux noeuds collecteurs, même dans le cas où des chemins ne sont plus valides. En effet, un même message de localisation peut être réacheminé par plusieurs noeuds récepteurs, tous possédants un champ de rang inférieur au noeud émetteur du message.

Avantageusement et pour tous les modes de mise en oeuvre de l'invention, les messages de localisation sont générés de manière asynchrone par les noeuds sources puis transmis de manière asynchrone. Chaque noeud applique une règle de détermination de l'instant de transmission d'un message de localisation associé. Plusieurs règles sont envisageables, telle que : selon une fréquence fixe, ou dès qu'une commande est reçue via un message de gestion, ... Ainsi, le procédé selon l'invention permet de faire varier le volume de données de localisation échangées en variant les règles à faire appliquer par les noeuds dispersés en plusieurs points du réseau. Les messages de localisation sont transmis à des instants permettant de s'affranchir des collisions entre messages.

Avantageusement et selon l'invention, la réception par un noeud d'un message de localisation déclenche l'envoi par ce noeud d'un message, dit message de service, qui constitue un message d'acquittement s'il accepte le message de localisation, et un message de non acquittement s'il refuse le message de localisation. Ce mécanisme d'acquittement ou de non acquittement des messages de localisation permet d'indiquer au noeud émetteur si un message de localisation a été reçu par un noeud, et si la réception est acceptée ou refusée par ce noeud. Il a pour but d'informer un noeud émetteur sur le statut de la réception. De plus, il est utilisable indifféremment dans l'un ou l'autre des deux modes de mise en oeuvre du procédé d'acheminement des messages de localisation présentés ci-dessus.

Avantageusement et selon l'invention, un noeud émetteur ne retransmet un message que si après un temps prédéterminé, aucun message de service n'est reçu. Une retransmission permet de donner une autre opportunité au noeud récepteur de pouvoir recevoir le message en cas d'une mauvaise réception précédente.

Avantageusement et selon l'invention, un noeud récepteur d'un message d'acquittement ne réémet pas ce message de service. En effet, un message d'acquittement étant utilisé pour acquitter un message identifié échangé entre deux noeuds, il n'a pas pour vocation à être diffusé vers d'autres noeuds du réseau.

Avantageusement et selon l'invention, un noeud récepteur d'un message de non acquittement renvoie un message de non acquittement aux noeuds émetteurs des messages de localisation qu'il reçoit (c'est-à-dire à destination du noeud collecteur), et ce jusqu'à la réception d'un message de gestion contenant une valeur de champ d'identifiant de session postérieure. L'indication d'invalidité du chemin passant par ce noeud est ainsi propagée à chaque fois qu'il est utilisé, et ce jusqu'à la remise à jour du chemin.

Une pluralité de noeuds du réseau selon l'invention peut être dédiée pour faire office de relais pour permettre aux messages de localisation émis par les noeuds sources de pouvoir atteindre les noeuds collecteurs. Ce mécanisme d'acheminement de données de localisation de proche en proche permet, d'une part d'étendre la taille du réseau sans pour autant devoir augmenter la portée de communication des noeuds par exemple en rajoutant des noeuds, et d'autre part d'augmenter l'autonomie en énergie des noeuds qui sont ainsi plus économiques à produire. Dans un réseau selon l'invention, outre le(s) noeud(s) collecteur(s), tous les autres noeuds peuvent être simultanément sources ou relais. De plus, un réseau selon l'invention peut comporter plusieurs noeuds collecteurs répartis sur une zone, permettant ainsi avantageusement d'augmenter le nombre de points de collecte des messages de localisation provenant d'une pluralité de noeuds sources.

L'invention peut faire l'objet de très nombreuses applications différentes.

Dans tout le texte, le terme « mobile » désigne tout objet dont la position est susceptible d'être modifiée, c'est-à-dire susceptible d'évoluer dans ladite zone d'évolution. Il est à noter à ce titre que rien n'empêche dans certaines applications que tout ou partie des mobiles soit normalement (le plus souvent) fixes.

Avantageusement et selon l'invention, les mobiles sont des terminaux aptes à être portés par des êtres vivants ou des objets tels que des véhicules, des meubles... Chaque terminal mobile est doté d'un dispositif électronique de communication constituant un noeud de mobile dans le réseau. Un tel terminal mobile peut par exemple être constitué par ou intégré dans un téléphone portable, un assistant personnel (PDA),... ou être au contraire constitué d'un terminal spécifique dédié à la localisation par le procédé selon l'invention. Un réseau selon l'invention peut, selon les applications de l'invention, comporter uniquement un noeud collecteur fixe, ou une pluralité de noeuds fixes, par exemple une pluralité de noeuds collecteurs fixes et/ou une pluralité de noeuds relais fixes par rapport à une zone d'évolution facilitant l'établissement d'un chemin de routage optimal en toutes circonstances par rapport à la zone d'évolution.

Dans certaines applications possibles de l'invention, les mobiles sont des structures en déplacement libre avec un fluide dans lequel elles sont placées, de façon à en suivre les courants. Leurs déplacements sont donc incontrôlés et en général indéterminés. Par exemple, avantageusement et selon l'invention les mobiles sont des aérostats placés dans l'atmosphère terrestre, et que l'on souhaite pouvoir au moins approximativement localiser par rapport à un noeud collecteur fixe au sol. Selon une autre application, les mobiles peuvent être des satellites d'une constellation de satellites que l'on souhaite pouvoir localiser dans l'espace par rapport à un noeud collecteur fixe au sol.

L'invention concerne également un procédé et un réseau caractérisés en combinaison par tout ou partie des caractéristiques mentionnées ci-dessus ou ci-après.

D'autres buts, caractéristiques et avantages de l'invention apparaîtront à la lecture de la description suivante de certains de ses modes de réalisation donnés uniquement à titre d'exemples non limitatifs, et qui se réfère aux figures annexées dans lesquelles :
- la figure 1 est une vue schématique d'un exemple de réseau selon l'invention,
- la figure 2 est une vue schématique de la structure interne d'un noeud d'un réseau selon l'invention,
- les figures 3a, 3b et 3c sont des vues schématiques illustratives des champs numériques contenus dans des messages échangés entre des noeuds d'un réseau selon l'invention, s'appliquant respectivement à un message de gestion, un message de localisation et un message de service,
- la figure 4 représente un logigramme des étapes exécutées par un noeud d'un réseau selon l'invention lors de la réception d'un message de gestion dans un procédé selon l'invention,
- les figures 5a et 5b représentent chacune un logigramme des étapes exécutées par un noeud d'un réseau selon l'invention lors de la réception d'un message de localisation dans un procédé selon l'invention, respectivement selon le premier (préférentiel) et le deuxième mode de mise en oeuvre de l'acheminement des trames de données de localisation,
- les figures 6a et 6b sont des vues schématiques similaires à la figure 1 illustrant un autre exemple d'un réseau selon l'invention, dans deux configurations différentes,
- la figure 7 est une vue schématique d'une enceinte d'école équipée d'un réseau selon l'invention.

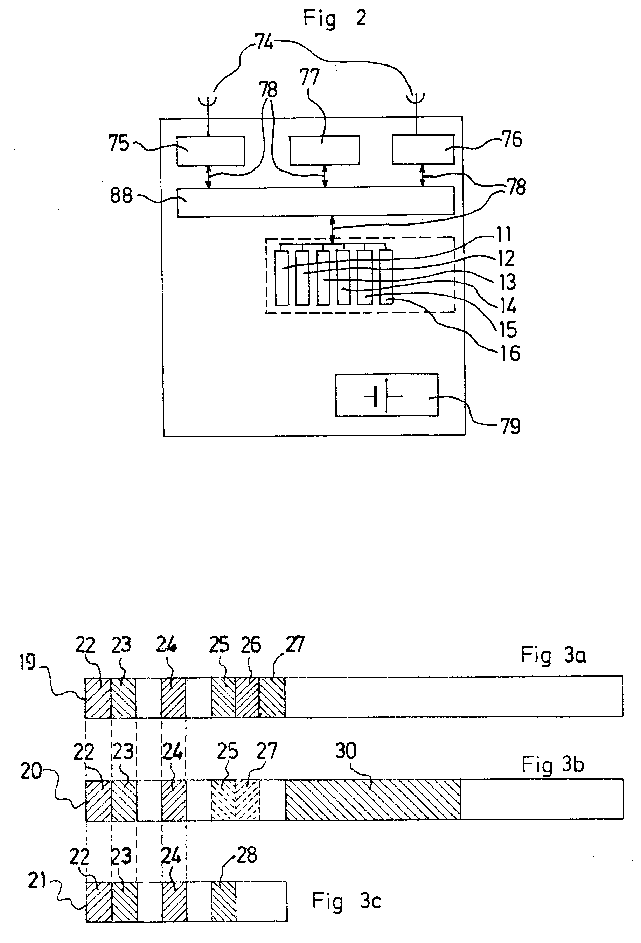

Sur les figures, les échelles et les proportions ne sont pas respectées et ce, à des fins de clarté de l'illustration. Dans les figures 3a, 3b et 3c, la disposition des champs numériques à l'intérieur des messages n'est qu'un exemple donné à des fins d'illustration.

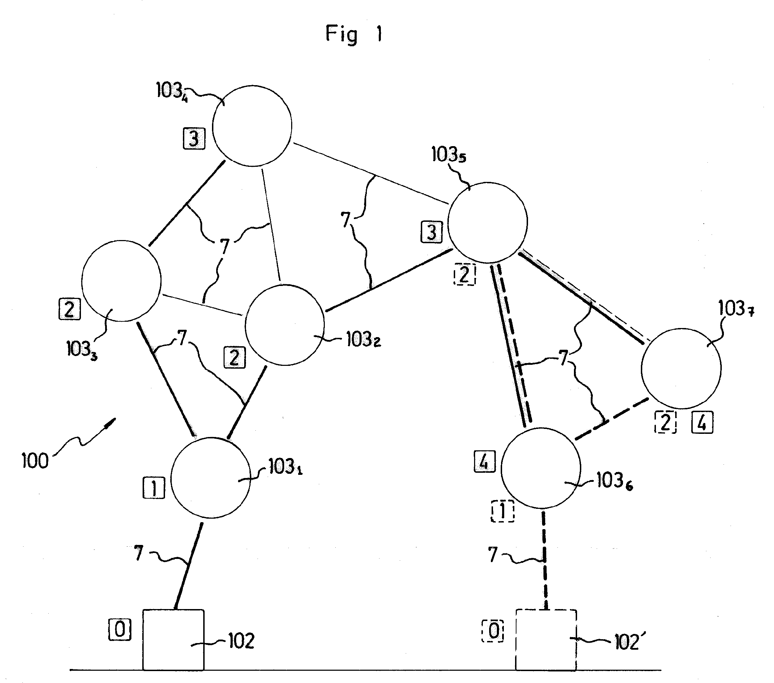

Sur la figure 1, les traits pleins ou pointillés représentent des liaisons entre des noeuds. De plus, les traits épais (pleins ou pointillés) représentent le plus court chemin de routage entre les noeuds résultant de l'application du procédé selon l'invention.

Dans un réseau 100 de communication selon l'invention, représenté sur la figure 1, la transmission de messages s'effectue de proche en proche entre des dispositifs électroniques, dits noeuds, dispersés géographiquement dans un environnement selon une topologie qui peut être indéterminée et/ou incontrôlée, au moins une partie des noeuds, dits noeuds de mobiles, étant portés par des mobiles susceptibles de se déplacer dans une zone d'évolution de surface ou d'espace, prédéterminée ou non (de contour variable dans le temps), elle-même géographiquement fixe ou mobile.

Les noeuds à portée de communication les uns des autres communiquent par l'intermédiaire de liaisons 7 sans fil, c'est-à-dire en particulier par des liaisons de type radiofréquence, et de préférence selon un protocole de liaisons série unidirectionnelle par paquets (« bursts »).

Le réseau 100 selon l'invention comporte différents types de noeuds qui se différencient par leur(s) fonction(s), étant entendu que rien n'empêche qu'au moins un noeud cumule plusieurs fonctions, au cours d'une même transmission ou d'une transmission à une autre.

Ainsi, au moins un noeud, dit noeud 102 collecteur, est un noeud fixe par rapport à la zone d'évolution des mobiles et destinataire de données de localisation issues d'autres noeuds du réseau, et notamment au moins des noeuds de mobiles, ces données de localisation étant propagées de proche en proche jusqu'à ce noeud 102 collecteur. Plus particulièrement, un réseau selon l'invention peut comporter une pluralité de noeuds 102, 102' collecteurs. Il est à noter que, lorsqu'une pluralité de noeuds 102, 102' collecteurs est déployée dans un réseau selon l'invention, les noeuds 102, 102' collecteurs sont de préférence reliés entre eux par des liaisons spécifiques, non représentées sur les figures (filaires ou sans fil), adaptées pour la communication exclusive entre les noeuds collecteurs et/ou entre ceux-ci et une station centrale. Ces liaisons spécifiques sont destinées à permettre essentiellement la récupération et la concaténation des données de localisation dans une base de données centralisée située dans une station centrale de stockage des informations.

Les autres noeuds 103₁, 103₂, 103₃, 103₄, 103₅, 103₆, 103₇, 103₈, 103₉,... (notés ci-après 103ᵢ quand il s'agit de l'un quelconque de ces noeuds) du réseau 100, dits noeuds relais, ont une fonction de relais (réception et émission) de messages de gestion et de messages de localisation, permettant une communication entre des noeuds source(s) et collecteur(s), et le cas échéant entre des noeuds relais, hors de portée les uns des autres. Par exemple, le noeud 103₃ (figure 1) est situé entre les noeuds 103₄ et 103₁ et sert de noeud relais pour la communication entre ces noeuds. Au moins une partie de ces noeuds 103ᵢ sont des noeuds de mobiles. Une partie de ses noeuds 103ᵢ peut être fixe par rapport à une zone d'évolution de mobiles. Dans ce cas, au moins un noeud 103ᵢ fixe est placé dans la zone d'évolution dans la zone de portée en réception d'au moins un noeud collecteur. En variante, tous les noeuds 103ᵢ sont des noeuds de mobiles.

Chaque noeud fixe (y compris chaque noeud collecteur) par rapport à la zone d'évolution présente une portée en réception inférieure à l'extension de cette zone d'évolution. En outre, chaque noeud mobile présente une portée en réception inférieure ou égale, de préférence strictement inférieure, à la portée en réception de chaque noeud fixe.

Au moins une partie des noeuds 103ᵢ sont des noeuds, dits noeuds sources, qui ont également une fonction d'initialisation, d'élaboration et d'émission de messages de localisation permettant la transmission à au moins un noeud collecteur de données de localisation concernant différents noeuds de mobile du réseau. Un réseau 100 selon l'invention comporte au moins un noeud source, notamment une pluralité de noeuds sources, et une pluralité de noeuds relais. Certains noeuds relais peuvent faire office de noeuds sources. Certains noeuds relais peuvent faire office de noeuds collecteurs.

Dans un réseau selon l'invention, chaque noeud 102, 102' collecteur doit être en liaison avec au moins un autre noeud, et au moins un chemin de routage doit pouvoir être établi entre chaque noeud de mobile -notamment chaque noeud source- et chaque noeud collecteur. Pour ce faire, en particulier la densité et le nombre de noeuds relais doivent être suffisamment importants, selon la portée des liaisons 7 sans fil.

Chaque noeud, quel que soit son type, comprend au moins un émetteur 75 et au moins un récepteur 76 (figure 2) reliés à au moins une antenne 74, adaptés pour établir des liaisons de communication sans fil (radiofréquence) avec les autres noeuds à portée.

De plus, chaque noeud, quel que soit son type, comporte des mémoires numériques de stockage de données. Une mémoire numérique, dite mémoire 11 d'identifiant de noeud, formée d'une mémoire morte du noeud, contient un code numérique identifiant de noeud, permettant de distinguer de manière unique chaque noeud du réseau. Le contenu de cette mémoire n'est pas effacé lors de la mise hors tension du noeud.

Les mémoires décrites ci-après sont des mémoires vives du noeud, et leur contenu peut être modifié et est accessible rapidement en lecture/écriture.

Un noeud comprend une mémoire numérique, dite mémoire 12 de rang, permettant de stocker une valeur représentant un rang du noeud par rapport à au moins un noeud collecteur. Cette valeur de la mémoire de rang est de préférence un entier naturel, mais peut être également en variante un entier relatif ou tout autre élément d'une suite mathématique permettant de représenter un rang du noeud considéré comme le nombre de transmissions successives à réaliser entre deux noeuds adjacents pour atteindre ce noeud à partir d'un noeud collecteur.

Un noeud comprend également une mémoire numérique, dite mémoire 13 de qualité de transmission permettant de stocker au moins une valeur représentative de la qualité de la transmission d'un message qu'il reçoit. Cette mémoire 13 de qualité de transmission permet par exemple de stocker une valeur représentative du niveau de signal de réception d'un message de gestion reçu par le noeud. Une telle technique de mesure du niveau d'un signal reçu est bien connue en elle-même (cf. par exemple « An Empirical Characterization of Radio Signal Strength Variability in 3-D IEEE 802.15.4 Networks Using Monopole Antennas » D. Lymperoupolos et al, K. Römer, H. Karl, and F. Mattern (Eds) : EWSN 2006, LNCS 3868, pp. 326-341, 2006).

En variante ou en combinaison, cette mémoire 13 de qualité de transmission permet de stocker une valeur représentative de la durée de transmission du signal de réception correspondant à un message de gestion reçu par le noeud. Une telle technique de mesure de la durée de transmission d'un signal reçu est bien connue en elle-même (cf. par exemple l'article «Multilateration » de http://en.wikipedia.org/wiki/Time_difference_of_arrival). Cette valeur de la durée de transmission peut être déterminée en calculant la différence entre l'instant d'émission du message par le noeud émetteur, dont la valeur est stockée dans un champ du message par ce noeud émetteur, avec l'instant de réception du message par le noeud récepteur.

Un noeud comprend également de préférence une mémoire numérique, dite mémoire 14 d'identifiant de noeud collecteur, permettant de stocker l'identifiant du noeud collecteur à destination duquel les messages de localisation sont envoyés de ce noeud ; une mémoire numérique, dite mémoire 15 d'identifiant de session, permettant de stocker une valeur (de préférence un entier naturel ou tout autre élément représentatif d'une suite mathématique) représentative de la session courante ; une mémoire numérique, dite mémoire 16 d'identifiant de noeud le plus proche, permettant de stocker un identifiant de noeud d'un noeud émetteur d'un message reçu.

Chaque noeud comprend également un module 88 de traitement adapté pour interpréter des données reçues et pour extraire le contenu d'une mémoire, en modifier la valeur ou y stocker une valeur. Un module 88 de traitement comprend des moyens de calcul tel qu'un calculateur (non représenté sur les figures) et des mémoires tampon pour stocker temporairement des données nécessaires à un calcul ou en attente d'être transmises ou stockées (non représentées sur les figures).

En pratique, les mémoires numériques de chaque noeud sont avantageusement organisées selon trois tampons ou groupes de tampons de mémoire :
- un premier tampon ou groupe de tampons de service mémorisant l'ensemble des données de service du réseau : éventuellement des données identifiant le chemin de routage optimal ; des données identifiant le noeud le plus proche et/ou les autres noeuds à portée ; des données représentatives d'une qualité de transmission d'un message reçu...
- un deuxième tampon ou groupe de tampons de paquets de données mémorisant les paquets de données de localisation des messages de localisation à destination du (des) noeud(s) collecteur(s) ;
- un troisième tampon ou groupe de tampons d'acquittement mémorisant les signaux d'acquittement ou de non acquittement reçus par ce noeud pour les données des messages de localisation en cours d'émission encore présentes dans le deuxième tampon ou groupe de tampons de paquets de données ; et les signaux d'acquittement ou de non acquittement émis par ce noeud pour les messages de gestion et/ou les messages de localisation qu'il reçoit.

Chaque noeud comprend également un module 77 de mesure du temps, tel qu'une horloge, au moins sensiblement synchronisé avec tous les noeuds du réseau. Ce module permet au noeud d'inclure une donnée représentative d'un temps (datation) dans les messages échangés.

Bien que cela ne soit pas nécessaire dans le cadre le plus général de l'invention, rien n'empêche que des noeuds sources d'un réseau selon l'invention soient dotés également d'une charge utile (variante non représentée) composée par exemple de moyens de mesure comprenant un ou plusieurs capteurs (exemples : capteurs de température, hygrométrie, pression, de champ magnétique...) ainsi qu'un module de contrôle des mesures adapté pour paramétrer les mesures à effectuer, mémoriser les mesures effectuées et envoyer au module 88 de traitement du noeud les mesures afin qu'elles puissent être mémorisées puis envoyées à destination d'un noeud collecteur.

Chaque noeud comprend des bus 78 de communication bidirectionnelle reliant le module 88 de traitement avec les autres modules, ainsi qu'avec les différentes mémoires du noeud. Ces bus 78 de communication bidirectionnelle permettent de faire transiter des données d'un module à l'autre à l'intérieur d'un noeud.

Chaque noeud comprend un module 79 d'alimentation électrique connecté par des câbles d'alimentation (non représentés sur les figures) aux autres modules du noeud et permettant leur alimentation en électricité à partir d'au moins une source d'énergie électrique (secteur, piles, accumulateurs, cellules photovoltaïques, alternateurs, éoliennes, ...), qui est autonome pour les noeuds de mobile.

Les liaisons 7 de communication entre des noeuds constituent le support d'échange des messages de différents types. Sur la figure 1, les noeuds en visibilité (à portée) les uns des autres sont reliés par au moins un trait (plein ou en pointillés) symbolisant une liaison 7 entre ces noeuds.

Chaque noeud est adapté pour recevoir et retransmettre des messages 19 de gestion (figure 3a) permettant d'établir et/ou de mettre à jour la topologie du réseau, et par ce biais d'informer les noeuds du réseau qu'une nouvelle session débute. Les messages 19 de gestion sont initiés exclusivement par le(s) noeud(s) collecteur(s) 102, 102', du réseau.

Chaque noeud est adapté pour recevoir et retransmettre des messages 20 de localisation (figure 3b), initiés exclusivement par un (des) noeud(s) source(s) et incluant les données de localisation des noeuds appartenant à un même chemin de routage entre le noeud source et un noeud collecteur.

Chaque noeud est adapté pour émettre et recevoir des messages 21 de service (figure 3c). Un tel message peut être initié par n'importe quel type de noeud suite à la réception par ce dernier d'un message 20 de données, comme confirmation qu'un message (de gestion ou de données de localisation) a été reçu.

Les données contenues dans les messages échangés entre les noeuds sont partitionnées en plusieurs champs numériques.

Quel que soit le type de message considéré, il comporte un champ numérique, dit champ 24 d'identifiant de type, permettant au module 88 de traitement d'un noeud récepteur de distinguer le type de message reçu, parmi les messages 19 de gestion, les messages 20 de localisation et les messages 21 de service.

De plus, tous les types de message comportent un champ numérique, dit champ 22 d'identifiant de noeud émetteur, permettant d'identifier, à la réception, au moins le noeud qui a émis le message en dernier, et un champ numérique, dit champ 23 d'identifiant de destinataire(s), permettant d'identifier, à la réception, à quel noeud (ou groupe de noeuds) est destiné le message, forçant ainsi les noeuds non destinataires à ignorer le message au moins pour partie. Ce champ 23 d'identifiant de destinataire(s) peut contenir un et seul identifiant de noeud, ou une pluralité d'identifiants de noeuds, ou un identifiant d'une liste de noeuds dont les identifiants sont mémorisés par une mémoire morte des différents noeuds.

Cependant, certains champs numériques des messages diffèrent selon le type de message considéré.

C'est ainsi qu'un message 19 de gestion comprend en outre au moins : un champ numérique, dit champ 25 d'identifiant de noeud collecteur, contenant l'identifiant du noeud 102, 102' collecteur ayant initié ce message de gestion; un champ numérique, dit champ 26 d'identifiant de session, contenant la valeur (entier naturel), de la dernière session en cours pour le noeud collecteur ayant initié ce message ; un champ numérique, dit champ 27 de rang, contenant la valeur (entier naturel) de rang du message de gestion modifiée par le dernier noeud émetteur du message.

Un message 20 de localisation comprend un champ numérique, dit champ 27 de rang, permettant de mémoriser au moins une valeur de rang d'un noeud de mobile, et un champ numérique, dit champ 25 d'identifiant de noeud collecteur et éventuellement un champ numérique, dit champ 30 de données utiles, contenant des données telles que des mesures effectuées par le noeud source destinées au noeud collecteur.

Un message 21 de service comprend en outre au moins un champ numérique, dit champ 28 de service, contenant des données représentatives d'un signal à transmettre, par exemple un signal d'acquittement de la réception d'un message de gestion et/ou d'un message de localisation, ou un signal de non acquittement de la réception d'un message de gestion et/ou d'un message de localisation.

De préférence, les messages sont transmis sous forme de trames séries avec en-tête et somme de contrôle, mais tout protocole ou codage de transmission approprié peut être envisagé.

### ÉTABLISSEMENT DES CHEMINS DE ROUTAGE PAR DIFFUSION DES MESSAGES DE GESTION :

Le procédé selon l'invention est adapté pour être mis en oeuvre par un réseau 100 décrit précédemment, et permet tout d'abord d'établir et de maintenir un chemin de routage optimal entre chaque noeud de mobile, notamment entre l'un quelconque des noeuds 103ᵢ, et chaque noeud 102, 102' collecteur. Ce chemin de routage optimal est déterminé par la diffusion de proche en proche d'un message 19 de gestion, émis par le noeud 102, 102' collecteur. De plus, la propagation d'un message 19 de gestion depuis un noeud 102, 102' collecteur vers les autres noeuds permet de déterminer la topologie du réseau 100 et d'ordonner ces noeuds le long d'un chemin adapté pour permettre, en retour, la propagation de messages de localisation vers ce noeud 102, 102' collecteur. Un chemin de routage est constitué de plusieurs segments, un segment étant la portion du chemin de routage qui sépare deux noeuds adjacents, c'est-à-dire situés l'un après l'autre sur le chemin, à portée de communication l'un par rapport à l'autre, sans être séparés par un autre noeud. Un message 19 de gestion véhicule, par l'intermédiaire du champ 27 de rang, le nombre de segments que compte déjà le chemin depuis son extrémité initiale (au niveau du noeud 102, 102' collecteur).

Sur la figure 1, chaque valeur incluse dans un carré à côté d'un noeud (trait plein ou pointillés) représente la valeur contenue dans sa mémoire 12 de rang, comme déterminé par le procédé selon l'invention. Un carré en traits pleins, respectivement en traits pointillés, est utilisé lorsqu'un noeud est situé sur un chemin de routage d'un message de gestion issu du premier noeud 102 collecteur, respectivement du deuxième noeud 102' collecteur. Ainsi, le contenu de la mémoire 12 de rang du noeud 102 collecteur est égale à 0, et celle du premier noeud 103₁ situé sur le chemin de routage partant du premier noeud 102 collecteur vaut 1.

De préférence, les noeuds 103ᵢ du réseau sont adaptés pour pouvoir être normalement en permanence dans un mode de veille et d'écoute de messages. Lorsque l'existence d'un message susceptible d'être reçu par le noeud 103ᵢ est détectée par ce dernier, le noeud 103ᵢ sort de ce mode de veille pour passer en mode de réception et de traitement du message reçu. Dans une autre variante possible de l'invention, les noeuds 103ᵢ peuvent être programmés pour vérifier l'existence de messages susceptibles d'être reçus pendant des périodes prédéterminées. En tout état de cause, dans un réseau selon l'invention, les différents noeuds 103ᵢ ne sont pas en permanence actifs, ce qui permet en particulier d'économiser l'énergie embarquée à bord de ces noeuds 103ᵢ.

On suppose que la mémoire 12 de rang des différents noeuds 103ᵢ contient initialement une valeur indéfinie pour le premier noeud 102 collecteur. Comme représenté à la figure 1, le premier noeud 102 collecteur envoie un premier message 19 de gestion comportant un champ 27 de rang contenant la valeur 0. Les traits pleins gras représentent le chemin de routage suivi par ce premier message 19 de gestion.

Le noeud 103₁, à portée de communication du premier noeud 102 collecteur, reçoit ce message 19 de gestion. Il est à noter à ce titre que cette réception ne nécessite aucun dialogue préliminaire entre les noeuds émetteur (noeud 102 collecteur) et récepteur (noeud 103ᵢ) du message 19 de gestion. La valeur initiale de la mémoire 12 de rang de ce noeud 103₁ étant indéfinie, le noeud 103₁ incrémente d'une unité le contenu du champ 27 de rang du message (valeur résultante égale à 1) et l'affecte à sa mémoire 12 de rang (valeur résultante égale à 1), puis réémet le message 19 de gestion. Dans une variante possible mais non obligatoire de l'invention, le module 88 de traitement du noeud 103₁ peut être adapté pour émettre un signal de service d'acquittement indiquant au noeud émetteur du message 19 de gestion (noeud 102 collecteur) que ce message 19 de gestion a bien été reçu et réémettant le cas échéant, la valeur de rang incrémentée correspondante. Dans la variante où les noeuds 103ᵢ sont normalement en mode de veille sur écoute, le noeud 103₁ repasse en mode de veille après avoir réémis le message 19 de gestion et, le cas échéant, le message de service d'acquittement.

Il est à noter qu'un noeud 102, 102' collecteur peut être adapté pour ignorer tous les messages 19 de gestion qu'il reçoit éventuellement en provenance des autres noeuds du réseau 100. Quoi qu'il en soit, à réception du message 19 de gestion (qu'il a lui-même initialement émis) tel que retransmis par le noeud 103₁, le module 88 de traitement du noeud 102, 102' collecteur constate que la valeur du champ 27 de rang du message de gestion est maintenant égale à 1, c'est-à-dire est supérieure à la valeur de sa mémoire 12 de rang (égale à 0). Dans cette situation, le noeud 102, 102' collecteur n'effectue aucune action, et, en particulier, ne modifie ni la valeur de sa mémoire 12 de rang, ni celle du champ 27 de rang du message de gestion.

Les noeuds 103₂ et 103₃, à portée de communication du noeud 103₁, reçoivent le message de gestion provenant du noeud 103₁. Chacun des noeuds 103₂ et 103₃, dont la mémoire 12 de rang contient initialement une valeur indéfinie, incrémente d'une unité le contenu du champ 27 de rang du message reçu (valeur résultante égale à 2) et l'affecte à sa mémoire 12 de rang (valeur résultante égale à 2), puis réémet le message 19 de gestion. En outre, les noeuds 103₂ et 103₃ mémorisent l'identifiant de noeud du noeud 103₁ dans leur mémoire 16 d'identifiant de noeud le plus proche, correspondant au fait que le noeud 103₁ est leur plus proche voisin sur le chemin de routage commençant par le noeud 102 collecteur.

Le noeud 103₂ (respectivement 103₃) ignore le message 19 de gestion provenant du noeud 103₃ (respectivement 103₂) car il contient une valeur de champ 27 de rang égale à celle contenue dans sa mémoire 12 de rang. De plus, le noeud 103₁ ignore les messages 19 de gestion provenant des noeuds 103₂ et 103₃ car ils contiennent chacun une valeur de champ 27 de rang supérieure au contenu de sa mémoire 12 de rang. Le noeud 103₄ reçoit les messages 19 de gestion provenant des noeuds 103₂ et 103₃.

La qualité de transmission déterminée par chaque noeud 103ᵢ à réception d'un message 19 de gestion peut être utilisée pour identifier, parmi les noeuds voisins ayant une même valeur de rang, le noeud le plus proche qui est à portée. Ainsi, en supposant que le message provenant du noeud 103₃ est reçu avec un niveau de signal plus élevé, le noeud 103₄ mémorise l'identifiant de noeud du noeud 103₃ dans sa mémoire 16 d'identifiant de noeud le plus proche (correspondant au fait que le noeud 103₃ est son plus proche voisin), puis incrémente d'une unité la valeur contenue dans le champ 27 de rang du message (valeur résultante égale à 3) et l'affecte au contenu de sa mémoire 12 de rang (valeur résultante égale à 3), puis réémet le message 19 de gestion. Le noeud 103₅ reçoit les messages de gestion provenant du noeud 103₂ et du noeud 103₄. Le noeud 103₂ ayant envoyé un message 19 de gestion comportant une valeur de champ 27 de rang plus petite (valeur égale à 2) que celle du message envoyé par le noeud 103₄ (valeur égale à 3), alors le noeud 103₅ mémorise l'identifiant de noeud du noeud 103₂ dans sa mémoire 16 d'identifiant de noeud le plus proche (correspondant au fait que le noeud 103₂ est son plus proche voisin). Le noeud 103₅ incrémente d'une unité la valeur contenue dans le champ 27 de rang (valeur résultante égale à 3) et l'affecte à sa mémoire 12 de rang (valeur résultante égale à 3), puis réémet le message 19 de gestion. Les noeuds 103₆ et 103₇, à portée de communication du noeud 103₅, reçoivent le message 19 de gestion provenant du noeud 103₅. Chacun des noeuds 103₆ et 103₇ incrémente le contenu du champ 27 de rang du message reçu (valeur résultante égale à 4) et l'affecte à sa mémoire 12 de rang (valeur résultante égale à 4), puis réémet le message 19 de gestion. En outre, les noeuds 103₆ et 103₇ mémorisent l'identifiant de noeud du noeud 103₅ dans leur mémoire 16 d'identifiant de noeud le plus proche, correspondant au fait que le noeud 103₅ est leur plus proche voisin.

Dans un réseau 100 comportant une pluralité de noeuds 102, 102' collecteurs, chaque noeud collecteur envoie un message 19 de gestion qui se différencie des autres messages par un champ 25 d'identifiant de noeud collecteur qu'il contient. De plus, l'envoi de messages 19 de gestion par chaque noeud 102, 102' collecteur est fait de manière asynchrone par rapport aux autres noeuds collecteurs. En conséquence, suite à la diffusion des différents messages 19 de gestion, les mémoires 12 de rang des différents noeuds mémorisent des valeurs de rang différentes pour les différents noeuds collecteurs du réseau.

Le réseau 100 représenté à la figure 1 comporte deux noeuds 102 et 102' collecteurs. De même que le premier noeud 102 collecteur, le deuxième noeud 102' collecteur envoie un deuxième message 19 de gestion, comportant un champ 27 de rang de valeur 0. Le chemin de routage suivi par le deuxième message 19 de gestion est représenté en traits pointillés gras. Le noeud 103₆, à portée de communication du deuxième noeud 102' collecteur, reçoit ce message. Or, comme décrit précédemment, la valeur contenue dans la mémoire 12 de rang du noeud 103₆ est égale à 4. Le noeud peut être positionné sur un chemin de routage plus court s'il est attaché au deuxième noeud 102' collecteur plutôt qu'au premier noeud 102 collecteur. Par conséquent, le noeud 103₆ incrémente d'une unité le contenu du champ 27 de rang du message (valeur résultante égale à 1) et l'affecte au contenu de sa mémoire 12 de rang (valeur résultante égale à 1), puis réémet le message 19 de gestion. Les noeuds 103₅ et 103₇, à portée de communication du noeud 103₆, reçoivent le message 19 de gestion provenant du noeud 103₆. Pour la même raison que le noeud 103₆, chacun des noeuds 103₅ et 103₇ incrémente d'une unité le contenu du champ 27 de rang du message reçu (valeur résultante égale à 2) et l'affecte au contenu de sa mémoire 12 de rang (valeur résultante égale à 2), puis réémet le message 19 de gestion. De plus, les noeuds 103₅ et 103₇ mémorisent l'identifiant de noeud du noeud 103₆ dans leur mémoire 16 d'identifiant de noeud le plus proche, correspondant au fait que le noeud 103₆ est leur plus proche voisin. Le noeud 103₅ (respectivement 103₇) ignore le message 19 de gestion provenant du noeud 103₇ (respectivement 103₅) car il contient une valeur de champ 27 de rang égale (valeur 2) à celle contenue dans leur valeur de mémoire 12 de rang. De plus, les noeuds 103₆ et 103₂, à portée de communication du noeud 103₅, reçoivent le message 19 de gestion provenant du noeud 103₅ qu'ils ignorent car le champ 27 de rang contient une valeur (2) supérieure ou égale à la valeur (2 et 1 respectivement) contenue dans leur mémoire 12 de rang. Le noeud 103₄, à portée de communication du noeud 103₅, ne reçoit pas le message 19 de gestion provenant du deuxième noeud 102' collecteur, car ce message de gestion n'est pas réémis par le noeud 103₅.

Dans le procédé selon l'invention, une session correspond à l'intervalle de temps pendant lequel le procédé considère que la topologie du réseau 100, telle que déterminée par la diffusion d'un message 19 de gestion par un noeud 102, 102' collecteur, reste valide. Après cet intervalle de temps, le noeud 102, 102' collecteur renvoie un nouveau message de gestion pour actualiser la topologie du réseau. Par conséquent, une session peut également être vue comme l'intervalle de temps séparant deux émissions d'un message 19 de gestion par un même noeud 102 collecteur.

A l'instant indiqué par son module 77 de mesure du temps, un noeud 102 collecteur émet un nouveau message 19 de gestion dont le champ 26 d'identifiant de session contient une nouvelle valeur.

A chaque session correspond un identifiant de session modifié par rapport au précédent selon une relation d'ordre connue des noeuds (par programmation de ces derniers). Un identifiant de session peut par exemple être une valeur numérique incrémentée d'une unité pour chaque nouvelle session, la valeur étant réinitialisée à 0 après avoir atteint une valeur maximum. Un unique message 19 de gestion est initié par chaque noeud 102, 102' collecteur pour chaque nouvelle session, et comporte une nouvelle valeur contenue dans le champ 26 d'identifiant de session.

Dans un réseau 100 comportant une pluralité de noeuds 102, 102' collecteurs, une session est unique pour un noeud collecteur donné. L'établissement d'une nouvelle session est géré de manière asynchrone entre les noeuds 102, 102' collecteurs.

La préparation de l'émission d'un message 19 de gestion à émettre par un noeud 102, 102' collecteur suit les étapes suivantes. Tout d'abord, le module 88 de traitement du noeud 102 collecteur inclut une valeur initiale prédéfinie dans le champ 27 de rang du message de gestion.

Ensuite, le noeud 102, 102' collecteur inclut son identifiant de noeud collecteur d'une part dans le champ numérique du message correspondant au champ 25 d'identifiant de noeud collecteur, et d'autre part dans le champ 22 d'identifiant de noeud émetteur. En outre, le noeud 102, 102' collecteur inclut une valeur numérique initiale prédéterminée dans le champ 15 d'identifiant de session. A titre d'exemple, on considère dans la suite de la description que la valeur initiale de l'identifiant de session est 0, et que la relation d'ordre d'évolution des identifiants de session suit une incrémentation d'une unité à chaque nouvelle session établie. Le module 88 de traitement du noeud 102 collecteur inclut la valeur de l'identifiant de destinataire dans le champ 23 d'identifiant de destinataire, les valeurs possibles pouvant correspondre à un groupe de noeuds, par exemple les noeuds à portée de communication directe du noeud 102, 102' collecteur (aussi appelés noeuds en visibilité), ou un noeud en particulier.

Dans le procédé selon l'invention, il est à noter que pour tous les noeuds et pour tous les types de message, l'instant de transmission d'un message par un noeud est déterminé de manière à limiter les collisions avec d'autres messages émis par des noeuds distincts, par exemple en émettant le message à un instant aléatoire dans un intervalle de temps prédéterminé.

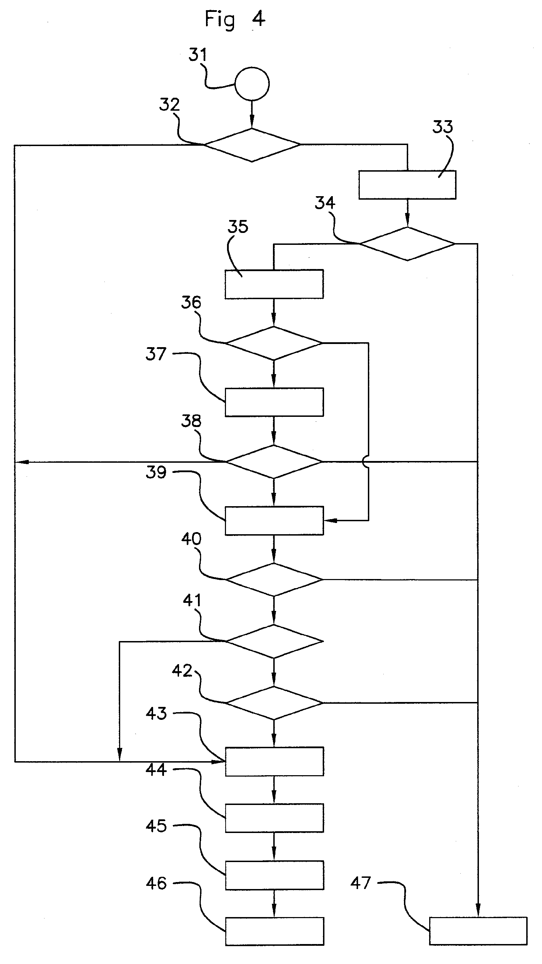

Chaque noeud exécute les étapes du procédé dans l'ordre présenté à la figure 4 qui donne un exemple non limitatif de réalisation possible.

À l'étape 31, le module 88 de traitement d'un noeud relais 103ᵢ interprète qu'un message a été reçu, en extrait le contenu du champ 24 d'identifiant de type du message et détermine qu'il s'agit d'un message 19 de gestion, auquel cas le module 88 de traitement exécute ensuite l'étape 32.

A l'étape 32, le module 88 de traitement du noeud 103ᵢ détermine s'il s'agit de la réception du premier message 19 de gestion. Si le noeud 103ᵢ reçoit un message 19 de gestion pour la première fois, alors le module 88 de traitement exécute l'étape 43, sinon il exécute l'étape 33.

A l'étape 33, le module 88 de traitement du noeud 103ᵢ extrait du message le contenu du champ 23 d'identifiant de noeud destinataire, puis exécute l'étape 34.

A l'étape 34, le module 88 de traitement du noeud 103ᵢ détermine s'il est destinataire du message 19 de gestion en comparant le contenu du champ 23 d'identifiant de destinataire(s) du message avec son identifiant de noeud mémorisé dans sa mémoire 11 d'identifiant de noeud. Si le module 88 de traitement d'un noeud 103ᵢ détermine qu'il fait partie des destinataires du message 19 de gestion, alors il exécute l'étape 35, sinon il exécute l'étape 47.

A l'étape 35, le module 88 de traitement du noeud 103ᵢ extrait du message le contenu du champ 25 d'identifiant de noeud collecteur et exécute l'étape 36.

A l'étape 36, le module 88 de traitement du noeud 103ᵢ compare le contenu du champ 25 d'identifiant de noeud collecteur extraite du message avec la valeur contenue dans la mémoire 14 de noeud collecteur du noeud 103ᵢ. Si les deux valeurs sont différentes alors il exécute l'étape 39, sinon il exécute l'étape 37.

A l'étape 37, le module 88 de traitement du noeud 103ᵢ extrait du message reçu le contenu du champ 26 d'identifiant de session et exécute l'étape 38.

A l'étape 38, le module 88 de traitement du noeud 103ᵢ compare la valeur extraite du champ 26 d'identifiant de session du message avec la valeur contenue dans sa mémoire 15 d'identifiant de session. Si la valeur provenant du message est antérieure (selon la relation d'ordre régissant l'évolution des identifiants de session) à celle du noeud 103ᵢ, alors il exécute l'étape 47. Si la valeur provenant du message est identique à celle mémorisée par le noeud 103ᵢ, alors il exécute l'étape 39. Enfin, si la valeur provenant du message est postérieure à celle du noeud 103ᵢ, alors le module 88 de traitement du noeud 103ᵢ exécute l'étape 43.

A l'étape 39, le module 88 de traitement du noeud 103ᵢ extrait du message le contenu du champ 27 de rang, puis exécute l'étape 40.

A l'étape 40, le module 88 de traitement du noeud 103ᵢ compare la valeur contenue dans le champ 27 de rang extraite à l'étape 39 avec la valeur contenue dans la mémoire 12 de rang du noeud. Si la valeur du champ 27 de rang du message est supérieure ou égale à la valeur contenue dans la mémoire 12 de rang, alors le module 88 de traitement du noeud 103ᵢ exécute l'étape 47. Sinon (c'est-à-dire si la valeur contenue dans la mémoire 12 de rang est supérieure à la valeur du champ 27 de rang du message, ou est une valeur indéfinie (par exemple la valeur maximum pouvant être prise par cette mémoire 12 enregistrée par défaut à la fabrication dans cette dernière)), il exécute l'étape 41.

A l'étape 41, le module 88 de traitement du noeud 103ᵢ teste si la valeur contenue dans la mémoire 12 de rang est égale à la valeur résultant de l'incrémentation du champ 27 de rang du message (soit valeur du champ 27 de rang plus une unité si chaque incrémentation est égale à une unité). Dans l'affirmative, le noeud 103ᵢ exécute l'étape 42. Sinon, il exécute l'étape 43.

A l'étape 42, le module 88 de traitement du noeud 103ᵢ mesure la qualité de transmission (niveau du signal et/ou durée de transmission) du message 19 de gestion reçu, et la compare avec celle du précédent message de gestion reçu, telle que mémorisée précédemment dans la mémoire 13 de qualité de transmission. Si cette dernière est supérieure à celle du message 19 de gestion reçu, cela signifie que le précédent message de gestion reçu avait été émis par un noeud émetteur plus proche, de sorte que le rang du noeud 103ᵢ ne doit pas être modifié. Dans ce cas le noeud 103ᵢ exécute l'étape 47. Sinon, la qualité de transmission étant améliorée, le noeud 103ᵢ exécute l'étape 43 pour incrémenter sa valeur de rang.

A l'étape 43, le module 88 de traitement du noeud 103ᵢ incrémente d'une unité la valeur contenue dans le champ 27 de rang du message reçu, puis exécute l'étape 44. Il est à noter que rien n'empêche de prévoir une valeur d'incrément différente de 1 si cela est considéré comme utile.

A l'étape 44, le module 88 de traitement du noeud 103ᵢ affecte la valeur ainsi incrémentée à l'étape 43, au contenu de sa mémoire 12 de rang, puis exécute l'étape 45.

A l'étape 45, le module 88 de traitement du noeud 103ᵢ remplace, dans le message de gestion, le contenu du champ 22 d'identifiant de noeud émetteur par la valeur contenue dans sa mémoire 11 d'identifiant de noeud ; mémorise la valeur de la qualité de transmission du message (valeur accessible lorsque le noeud reçoit le message, depuis l'étape 31) dans la mémoire 13 de qualité de transmission ; extrait du message 19 de gestion et mémorise respectivement le contenu du champ 25 d'identifiant de noeud collecteur dans la mémoire 14 d'identifiant de noeud collecteur, le contenu du champ 26 d'identifiant de session dans la mémoire 15 d'identifiant de session, le contenu du champ 22 d'identifiant de noeud émetteur dans la mémoire 16 d'identifiant du noeud le plus proche. Puis le module 88 de traitement du noeud 103ᵢ exécute l'étape 46.

A l'étape 46, le module 88 de traitement du noeud 103ᵢ retransmet le message de gestion 19, c'est-à-dire l'émet avec son émetteur 75.

A l'étape 47, le module 88 de traitement du noeud 103ᵢ ignore le message de gestion reçu, et ne le retransmet pas.

Avantageusement, un message de gestion peut être exempt de toute autre donnée supplémentaire. Rien n'empêche cependant de prévoir qu'un message de gestion puisse véhiculer soit des données supplémentaires à lire par les noeuds (par exemple la valeur de la fréquence de mesure), soit une commande à exécuter par tout ou partie des noeuds 103ᵢ (par exemple l'identifiant d'un noeud source chargé d'initialiser la retransmission de données de localisation et/ou une durée maximum à partir de laquelle un noeud qui reçoit le message 19 de gestion initialise et émet un message de localisation...).

Dans cette dernière variante, un noeud 103ᵢ, s'il est inclus dans le(s) destinataire(s) d'un message de gestion (étape 34), extrait et stocke lesdites données supplémentaires contenues dans le message, puis le cas échéant, exécute la commande associée au message.

Dans les exemples décrits ci-dessus en référence à la figure 1, la qualité de transmission mesurée par chaque noeud récepteur est utilisée pour identifier un noeud le plus proche de ce noeud récepteur.

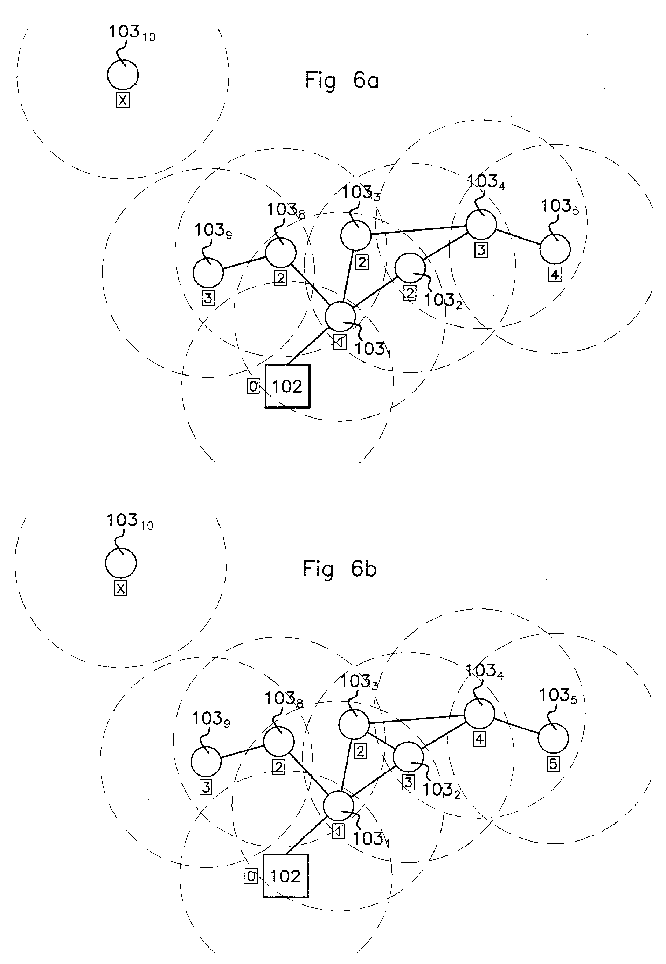

Dans une variante particulièrement avantageuse de l'invention et comme illustré par les figures 6a et 6b, l'utilisation de la mesure de la qualité de transmission au niveau de chaque noeud récepteur peut être utilisée pour affiner l'optimisation du chemin de routage.

Dans l'exemple illustré sur ces figures, le réseau comprend un seul noeud 102 collecteur qui émet un message 19 de gestion. La portée en réception de chacun des noeuds est représentée schématiquement par des cercles en pointillés.

Sur la figure 6a, la topologie du réseau a été représentée dans une variante où la qualité de transmission n'est pas utilisée pour déterminer les rangs des différents noeuds 103ᵢ.

La propagation du message 19 de gestion et l'attribution des rangs s'effectue la même façon que celle décrit ci-dessus en référence à la figure 1. Ainsi, le noeud 103₁ prend le rang 1, les noeuds 103₂, 103₃, 103₈ prennent le rang 2, les noeuds 103₄, 103₉ prennent le rang 3, et le noeud 103₅ prend le rang 4. Le noeud 103₁₀ est hors de portée, ne reçoit aucun message de gestion et sa valeur de rang reste indéfinie.

Sur la figure 6b, la qualité de transmission est prise en compte. Ainsi, à réception d'un message 19 de gestion, le noeud 103₂ détermine au moins une valeur de qualité de transmission correspondante (en mesurant le niveau du signal de réception et/ou en calculant la durée de la transmission) et compare cette valeur avec celle mémorisée dans sa mémoire 13 de qualité de transmission lors de la réception d'un message 19 de gestion précédent. Lors de la réception du message de gestion émis par le noeud 103₃, le noeud 103₂ détermine que la qualité de transmission du message de gestion émis par le noeud 103₃ est meilleure que celle du message de gestion préalablement émis par le noeud 103₁. En conséquence, le noeud 103₂ modifie la valeur de sa mémoire 12 de rang à partir de celle du noeud 103₃ telle que reçue dans le champ de rang du message de gestion en provenance de ce noeud, en l'incrémentant, c'est-à-dire adopte et mémorise dans la mémoire 12 de rang la valeur 3 à la place de la valeur 2. Si, comme dans l'exemple représenté, le noeud 103₂ est par ailleurs plus proche du noeud 103₄, les noeuds 103₄ et 103₅ modifient alors ensuite en conséquence les valeurs de leur rang à partir du message de gestion réémis par le noeud 103₂ avec la nouvelle valeur de rang. Ainsi, le noeud 103₄ prend la valeur de rang égale à 4 et la mémorise et le noeud 103₅ prend la valeur de rang égal à 5 et la mémorise. Au contraire, si c'était le noeud 103₃ qui était le plus proche du noeud 103₄ (variante non représentée), les noeuds 103₄ et 103₅ conserveraient leur valeur de rang initiale, à savoir respectivement 3 et 4.

Ainsi, le chemin de routage optimum (qui était 103₅, 103₄, 103₂, 103₁, 102 ; ou 103 103₄, 103₃, 103₁, 102) est modifié pour devenir : 103₅, 103₄, 103₂, 103₃, 103₁, 102.

Il est à noter que la valeur de la qualité de transmission peut également être utilisée pour déterminer une durée d'attente de chaque noeud avant réémission d'un message de gestion.

Par exemple, il peut être prévu que chaque noeud ne réémet un message 19 de gestion, après mise à jour, qu'après attente d'une durée de temporisation prédéterminée proportionnelle à la valeur de la qualité de transmission correspondant à ce message 19 de gestion lorsqu'il a été reçu par ce noeud. Dans cette variante, on favorise la rapidité de transmission du message 19 de gestion.

À l'inverse, il peut être prévu que chaque noeud ne réémet un message 19 de gestion, après mise à jour, qu'après attente d'une durée temporisation prédéterminée inversement proportionnelle à la valeur de la qualité de transmission correspondant à ce message 19 de gestion lorsqu'il a été reçu par ce noeud. Dans cette variante, on favorise les corrections de rang en fonction de la qualité de transmission.

De préférence, pour prendre en compte une variation de qualité de transmission, chaque noeud compare la différence entre les valeurs de qualité de transmission à une valeur seuil prédéterminée, de sorte que si la différence est inférieure à cette valeur seuil, il est considéré que la qualité de transmission n'a pas varié.

### ÉLABORATION ET ÉMISSION DES MESSAGES DE LOCALISATION :

La topologie et/ou la programmation d'un réseau selon l'invention sont choisies de telle sorte que les données de localisation concernant tous les noeuds de mobiles appartenant, à un instant donné (c'est-à-dire lors d'une même session) au réseau, soient transmises à au moins un noeud collecteur. Plusieurs variantes de réalisation sont possibles pour assurer cette fonction.

Dans une première variante de réalisation, chaque noeud de mobile est adapté pour transmettre ses propres données de localisation vers au moins un noeud collecteur, à chaque fois qu'il modifie la valeur de sa mémoire de rang pour ce noeud collecteur. Dans cette variante, chaque message de localisation est propre à un noeud de mobile et est transmis au noeud collecteur via les autres noeuds du réseau appartenant au chemin de routage précédemment défini par la diffusion d'un message 19 de gestion, et qui font office de noeuds de relais.

Dans une deuxième variante de réalisation préférentielle, lorsqu'un message de gestion cesse d'être reçu par d'autres noeuds 103ᵢ du réseau, c'est-à-dire arrive à une extrémité terminale du chemin de routage déterminé par la diffusion de ce message de gestion, le dernier noeud du réseau ayant reçu ce message de gestion (c'est-à-dire le noeud terminal du chemin de routage le plus éloigné du noeud collecteur) fait office de noeud source et, de préférence après une durée prédéterminée par temporisation, initialise, élabore et retransmet un message de localisation vers le noeud collecteur qui a émis précédemment le message de gestion. Ce message de localisation comprend les données de localisation du noeud source terminal et, de préférence, est complété par chaque noeud relais de mobile par lequel il transite avec les données de localisation de ce noeud relais de mobile. En pratique, le plus simple consiste à prévoir que le message localisation est complété par les données de localisation de chaque noeud par lequel il transite dans sa transmission depuis le noeud source terminal vers le noeud collecteur.

D'autres variantes sont possibles et ces différentes variantes peuvent être combinées entre elles.

Le procédé selon l'invention permet de collecter des messages de localisation émis depuis des noeuds sources à destination d'au moins un noeud 102, 102' collecteur, relayés de proche en proche par l'intermédiaire de noeuds relais 103ᵢ.

Les messages 20 de localisation d'un noeud source sont envoyés à destination du noeud 102, 102' collecteur dont il a mémorisé la valeur dans sa mémoire 14 d'identifiant de noeud collecteur, et ces messages de localisation empruntent le chemin de routage précédemment défini par un message 19 de gestion pour déterminer le chemin optimal permettant d'atteindre le noeud 102, 102' collecteur.

De préférence, l'utilisation de messages 21 de service permet de tracer la réception d'un message 20 de localisation émis. L'envoi par un noeud 103ᵢ d'un message 21 de service est effectué avant que ce noeud 103ᵢ ne réémette le message 20 de localisation (vers un noeud suivant du chemin). Cependant, l'utilisation de tels messages 21 de service est optionnelle pour le fonctionnement d'un procédé selon l'invention. En outre, un noeud 103ᵢ émetteur ne retransmet un message 20 de localisation reçu que si, après un temps prédéterminé, aucun message 21 de service n'est reçu. Un noeud récepteur d'un message 21 de service transmettant un signal d'acquittement ne réémet pas ce message 21 de service. Enfin, un noeud récepteur d'un message 21 de service transmettant un signal de non acquittement renvoie un message de non acquittement aux noeuds émetteurs des messages de données qu'il reçoit, et ce jusqu'à la réception d'un nouveau message 19 de gestion contenant un identifiant de session postérieure. Ceci permet de propager l'indication d'invalidité d'une portion du chemin à chaque fois qu'un message 20 de localisation est reçu.

Selon un premier mode de réalisation du procédé d'acheminement des messages 20 de localisation, un message 20 de localisation est émis par un noeud à destination du dernier noeud 103ᵢ dont il a mémorisé l'identifiant de noeud dans sa mémoire 16 d'identifiant de noeud le plus proche (à l'étape 45 précédente résultant de la réception d'un message de gestion). Pour ce faire, le module 88 de traitement du noeud insère son identifiant de noeud, contenu dans sa mémoire 11 d'identifiant de noeud, dans le champ 22 d'identifiant du noeud émetteur du message 20 de localisation, puis il insère le contenu de sa mémoire 16 d'identifiant de noeud le plus proche dans le champ 23 d'identifiant de noeud destinataire du message 20 de localisation, puis il insère la valeur de rang contenue dans sa mémoire 12 de rang vis-à-vis du noeud collecteur dans le champ 27 de rang du message 20 de localisation, puis le noeud émet le message 20 de localisation.

En prenant l'exemple de topologie de la figure 1, en supposant que le deuxième noeud 102' collecteur n'existe pas, le réseau ne comportant qu'un seul noeud 102 collecteur, les noeuds 103₆ et 103₇ émettent un message 20 de localisation à destination du noeud 1035_{,} leur voisin à portée le plus proche. Le noeud 103₅ reçoit ces deux messages 20 de localisation et retransmet chacun d'eux vers le noeud 103₂ son voisin à portée le plus proche. Le noeud 103₅ incorpore de préférence également ses propres données de localisation, c'est-à-dire son code d'identification et la valeur de rang de sa mémoire 12 de rang vis-à-vis du noeud 102 collecteur, dans les champs correspondants des messages 20 de localisation qui concatènent ainsi les différentes données de localisation des différents noeuds par lesquels ils transitent. Le noeud 103₂ exécute les mêmes opérations et retransmet les messages 20 de localisation à destination du noeud 103₁ son voisin le plus proche. Le noeud 103₃ reçoit un message 20 de localisation provenant du noeud 103₄ qui a également initialisé et émis un tel message 20 de localisation, et, après y avoir incorporé ses propres données de localisation, et le noeud 103₃ retransmet ce message 20 de localisation à destination du noeud 103₁, son voisin le plus proche. Enfin, le noeud 103₁ reçoit et retransmet tous les messages 20 de localisation qu'il a reçu et émanant des noeuds 103₇, 103₆, 103₄, à destination du noeud 102 collecteur. Le noeud 102 collecteur reçoit ainsi tous les messages 20 de localisation, incorporant toutes les données de localisation de l'ensemble des noeuds 103ᵢ.

Dans le cas où le réseau comporte deux noeuds 102, 102' collecteurs, comme représenté figure 1, le noeud 103₄ est un noeud source pour un message 20 de localisation à destination du premier noeud 102 collecteur comme décrit ci-dessus. Par contre, les noeuds 103₇ et 103₅ sont des noeuds sources pour des messages 20 de localisation à destination du deuxième noeud 102' collecteur comme suit. Les noeuds 103₅ et 103₇ émettent chacun un message 20 de localisation à destination du noeud 103₆, leur voisin le plus proche. Le noeud 103₆ retransmet ces messages 20 de localisation, après y avoir incorporé ses propres données de localisation, à destination du deuxième noeud 102' collecteur. Ainsi, le réseau collecte les messages 20 de localisation et les données de localisation des différents noeuds 103ᵢ en deux points qui sont les noeuds 102 et 102' collecteurs.

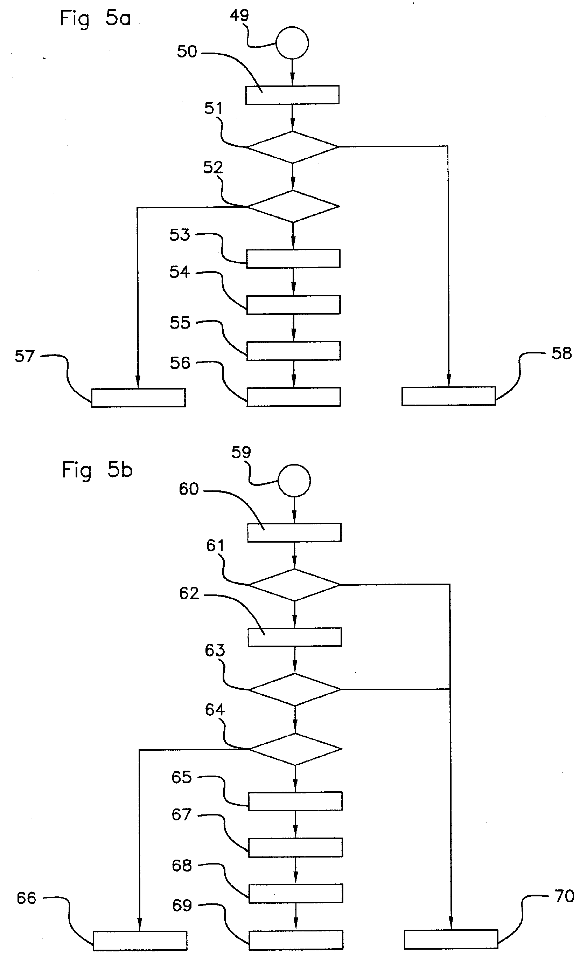

Selon le procédé décrit à la figure 5a, à l'étape 49, le module 88 de traitement du noeud 103ᵢ interprète qu'un message a été reçu, extrait du message la valeur contenue dans le champ 24 d'identifiant de type et détermine qu'il s'agit d'un message 20 de localisation, puis, dans l'affirmative, exécute l'étape 50.

A l'étape 50, le module 88 de traitement du noeud 103ᵢ extrait le contenu de la mémoire 22 d'identifiant de destinataire du message et exécute l'étape 51.

A l'étape 51, le module 88 de traitement du noeud 103ᵢ compare le contenu du champ 22 d'identifiant de noeud destinataire extrait du message avec le contenu de sa mémoire 11 d'identifiant de noeud. Si les deux valeurs sont différentes, alors le noeud 103ᵢ exécute l'étape 58 d'arrêt. Sinon, il exécute l'étape 52.

A l'étape 52, le module 88 de traitement du noeud 103ᵢ détermine s'il accepte le message de localisation lui étant destiné. S'il l'accepte, il exécute l'étape 53. S'il le refuse, il exécute l'étape 57. Ce dernier cas peut intervenir, par exemple, lorsque le chemin est rompu après le noeud 103ᵢ, ou lorsque sa mémoire tampon de traitement des messages sortants est saturée.

A l'étape 53, le module 88 de traitement du noeud 103ᵢ envoie un message 21 de service d'acquittement du message, vers le noeud émetteur du message 20 de localisation, puis il exécute l'étape 54.

A l'étape 54, le module 88 de traitement du noeud 103ᵢ insère l'identifiant du prochain noeud sur le chemin (correspondant au contenu de la mémoire 16 d'identifiant de noeud le plus proche) dans le champ 23 d'identifiant de destinataire du message 20 de localisation. Ensuite, le module 88 de traitement du noeud 103ᵢ exécute l'étape 55.

A l'étape 55, le module 88 de traitement du noeud 103ᵢ insère le contenu de sa mémoire 11 d'identifiant de noeud dans le champ 22 d'identifiant de noeud émetteur du message, et insère le contenu de sa mémoire 12 de rang dans le champ 27 de rang du message, ce champ 27 de rang contenant les différentes valeurs de rang insérées par les différents noeuds par lesquels le message 20 de localisation a transité. Les rangs de ces différents noeuds sont donc concaténés dans le champ 27 de rang. De même, le champ 22 d'identifiant de noeud émetteur concatène les identifiants des différents noeuds par lesquels le message 20 de localisation a transité. Les champs 22 d'identifiant de noeud émetteur et 27 de rang sont de préférence structurés et/ou utilisés en liaison l'un avec l'autre de façon à permettre l'association de chaque valeur de rang avec l'identifiant du noeud émetteur correspondant. Le noeud 103ᵢ exécute ensuite l'étape 56.

A l'étape 56, le module 88 de traitement du noeud 103ᵢ réémet le message 20 de localisation via son émetteur 75.

A l'étape 57, le module 88 de traitement du noeud 103ᵢ envoie un message 21 de service de non acquittement du message vers le noeud émetteur du message 20 de données.

A l'étape 58 d'arrêt, le module 88 de traitement du noeud 103ᵢ ignore le message 20 de localisation reçu, et ne le retransmet pas.

Selon ce premier mode de réalisation de l'acheminement des messages de localisation, chaque message de localisation suit un chemin unique jusqu'au noeud collecteur approprié, et il parvient au noeud collecteur en un exemplaire unique.

Selon un deuxième mode de réalisation de l'acheminement des messages 20 de localisation, un message 20 de localisation est émis par un noeud 103ᵢ à destination des noeuds à portée ayant une plus petite valeur de rang. Ainsi, un message 20 de localisation se propage dans le sens décroissant des valeurs de rang contenues dans les mémoires 12 de rang des noeuds, jusqu'à atteindre un noeud 102 collecteur (le cas échéant 102').

En prenant l'exemple de topologie de la figure 1, mais en supposant que le deuxième noeud 102' collecteur n'existe pas, le réseau ne comportant qu'un seul noeud 102 collecteur, les noeuds 103₆ et 103₇ émettent un message 20 de localisation contenant une valeur de champ 27 de rang égale à 4. Le noeud 103₅ reçoit ces deux messages. Étant donné que le contenu de sa mémoire 12 de rang vaut 3 et qu'elle est inférieure au champ 27 de rang de chacun des messages reçus, il ajoute au champ 27 de rang la valeur 3 (valeur égale au contenu de sa mémoire 22 de rang) et réémet ces messages. Les noeuds 103₂ et 103₄ reçoivent ces messages. Mais seul le noeud 103₂ va les retransmettre (après y avoir inséré ses propres données de localisation) puisque la valeur de sa mémoire 12 de rang est égale à 2 et donc inférieure aux valeurs contenues dans les champs 27 de rang des messages reçus. Le noeud 103₄ émet son propre message de localisation en ajoutant au champ 27 de rang la valeur de sa mémoire 12 de rang, égale à 3. Les noeuds 103₃ et 103₂ reçoivent ce message, et vont tous les deux le réémettre (après y avoir inséré leurs propres données de localisation) puisque la valeur contenue dans leur mémoire 12 de rang est inférieure à celle contenue dans le champ 27 de rang du message initié par le noeud 103₄. Le noeud 103₁ reçoit tous les messages de localisation émis par les noeuds 103₃ et 103₂ et après y avoir inséré ses propres données de localisation (identifiant et rang égal à 1) les retransmet au noeud 102 collecteur. Ainsi, un message de localisation en provenance des noeuds 103₇ et 103₆ est acheminé par le chemin suivant : 103₅ puis 103₂ puis 103₁, jusqu'au noeud 102 collecteur. Un message de localisation en provenance du noeud 103₄ est acheminé par les chemins suivants : 103₂ puis 103₁, jusqu'au noeud 102 collecteur, et également par 103₃ puis 103₁, jusqu'au noeud 102 collecteur.

Dans le cas où le réseau 100 comporte deux noeuds 102 et 102' collecteurs comme représenté figure 1, le noeud 103₄ envoie son message de localisation à destination du premier noeud 102 collecteur comme décrit ci-dessus. Par contre, les noeuds 103₇ et 103₅ envoient leurs messages de localisation à destination du deuxième noeud 102' collecteur comme suit. Le noeud 103₅ émet un message de localisation contenant ses données de localisation (avec un champ 27 de rang égal à 2). Les noeuds 103₆ et 103₇ reçoivent ce message. Mais seul le noeud 103₆ va le transmettre, puisque la valeur contenue dans sa mémoire 12 de rang est égale à 1, inférieure à celle contenue dans le champ 27 de rang du message, tandis que le contenu de la mémoire 12 de rang du noeud 103₇ est égal à 2. Le noeud 103₇ émet un message 20 de localisation contenant ses propres données de localisation, et contenant un champ 27 de rang égal à 2. Ce message est reçu par les noeuds 103₆ et 103₅. Mais seul le noeud 103₆ va le réémettre puisque la valeur contenue dans sa mémoire 12 de rang est égale à 1, et est donc inférieure à celle du champ 27 de rang de ce message. Le noeud 103₆ ajoute ses propres données de localisation dans les champs correspondants des deux messages reçus en provenance des noeuds 103₇ et 103₅. Ces messages de localisation sont reçus par le noeud 102' collecteur. Ainsi, un message de localisation en provenance des noeuds 103₇ et 103₅ est acheminé par le noeud 103₆, jusqu'au noeud 102' collecteur. Ainsi, le réseau collecte des messages 20 de localisation en deux points qui sont les noeuds 102 et 102' collecteurs.

Selon le procédé décrit à la figure 5b, à l'étape 59, le module 88 de traitement du noeud 103ᵢ interprète qu'un message a été reçu, en extrait le contenu du champ 24 d'identifiant de type et détermine qu'il s'agit d'un message 20 de localisation, puis, dans l'affirmative, exécute l'étape 60.

A l'étape 60, le module 88 de traitement du noeud 103ᵢ extrait du message 20 de données, la valeur contenue dans le champ 25 d'identifiant de noeud collecteur, et il exécute l'étape 61.

A l'étape 61, le module 88 de traitement du noeud 103ᵢ extrait du message la valeur contenue dans le champ 25 d'identifiant de noeud collecteur et la compare avec celle contenue dans la mémoire 14 d'identifiant de noeud collecteur mémorisée dans le noeud. Si les deux valeurs sont différentes, le module 88 de traitement du noeud 103ᵢ exécute l'étape 70 d'arrêt, ce noeud 103ᵢ n'étant pas sur le chemin de routage pour le noeud collecteur de ce message. Si elles sont identiques, il exécute l'étape 62.

A l'étape 62, le module 88 de traitement du noeud 103ᵢ extrait du message le contenu du champ 27 de rang pour le noeud collecteur, puis exécute l'étape 63.

A l'étape 63, le module 88 de traitement du noeud 103ᵢ compare, pour ce noeud collecteur, la valeur extraite du message qui était contenue dans le champ 27 de rang avec la valeur contenue dans sa mémoire 12 de rang. Si la valeur du message est supérieure ou égale à celle du noeud, alors le noeud exécute l'étape 70 d'arrêt. Sinon, il exécute l'étape 64.

A l'étape 64, le module 88 de traitement du noeud 103ᵢ détermine s'il accepte le message de localisation reçu. S'il le refuse, alors il exécute l'étape 66. S'il l'accepte, alors il exécute l'étape 65.

A l'étape 65, le module 88 de traitement du noeud 103ᵢ renvoie un message 21 de service d'acquittement du message vers le noeud émetteur du message de localisation, puis il exécute l'étape 67.

A l'étape 66, le module 88 de traitement du noeud 103ᵢ renvoie un message 21 de service de non acquittement du message vers le noeud émetteur du message de localisation.

A l'étape 67, le module 88 de traitement du noeud 103ᵢ ajoute, dans le champ 27 de rang du message 20 de localisation, la valeur contenue dans sa mémoire 12 de rang, puis il exécute l'étape 68.

A l'étape 68, le module 88 de traitement du noeud 103ᵢ ajoute son identifiant de noeud, contenu dans sa mémoire 11 d'identifiant de noeud, dans le champ 22 d'identifiant de noeud émetteur du message 20 de données, puis il exécute l'étape 69.

A l'étape 69, le module 88 de traitement du noeud 103ᵢ réémet le message 20 de localisation via son émetteur 75.

A l'étape 70 d'arrêt, le module 88 de traitement du noeud 103ᵢ ignore le message de localisation reçu, et ne le retransmet pas.

Selon ce deuxième mode de réalisation, un message 20 de localisation suit potentiellement plusieurs chemins, et arrive en plusieurs exemplaires au noeud 102, 102' collecteur. Cette redondance du message de localisation à la réception peut permettre de pallier un problème de chemin endommagé.

Les messages de gestion diffusés de proche en proche à partir de chaque noeud collecteur selon une transmission qui peut être qualifiée de « montante » (par opposition à la transmission, pouvant être qualifiée de « descendante » des messages de localisation depuis les noeuds sources jusqu'au(x) noeud(s) collecteur(s)) permettent d'établir une topologie du réseau et d'optimiser les chemins de routage entre les noeuds.

Par ailleurs, un réseau selon l'invention peut être doté de fonctionnalités supplémentaires améliorant son fonctionnement, comme par exemple le fait que le module 88 de traitement de chaque noeud soit adapté pour émettre un message de service de type PING :
- à destination d'un noeud prédéterminé (noeud le plus proche dernièrement identifié dans sa mémoire 16), de façon à vérifier que ce noeud est encore à portée, et/ou
- à tous les noeuds pour identifier les noeuds qui sont à portée et/ou pour synchroniser leurs horloges respectives.

Dans ce cas, le module de traitement de chaque noeud est aussi adapté pour répondre à un tel message de service PING qu'il reçoit en renvoyant à destination du noeud émetteur un message de service de type PONG permettant de valider la bonne réception du message de service PING et renvoyant les informations d'identification correspondantes et le cas échéant d'autres informations, comme par exemple son rang vis-à-vis de chaque noeud collecteur, le niveau de réception, la date précise de son horloge... Un tel protocole PING/PONG de validation de liaison sans fil est bien connu en soi. Il peut être mis en oeuvre automatiquement par chaque noeud par exemple après écoulement d'une certaine durée prédéterminée sans réception de message.

Un procédé et un réseau selon l'invention présentent de nombreux avantages. En particulier, la transmission des messages est effectuée via des liaisons série par paquets unidirectionnelles permettant l'allocation dynamique des rangs et leurs corrections en fonction de la qualité de transmission (permettant d'augmenter la précision de localisation). Une telle communication nécessite peu d'énergie, les messages transmis de gestion et de localisation étant très peu volumineux. Cela étant, rien n'empêche de prévoir d'ajouter d'autres types de messages ou d'autres types de données à chaque type de message.

En outre, la sécurité de fonctionnement est assurée dans la mesure où l'interception des messages par des tiers est peu probable et, en tout état de cause, l'interception d'un message ne procure aucune information pertinente pour un tiers. Les données de localisation collectée au niveau des différents noeuds collecteurs permettent de déduire de nombreuses informations, et ces déductions peuvent même éventuellement être effectuées automatiquement par voie logicielle au niveau d'un système informatique centralisé. À ce titre, les données de localisation peuvent être complétées par des informations supplémentaires accessibles au niveau du système informatique centralisé, par exemple la topographie de la zone d'évolution, la position connue de certains noeuds par rapport à la zone d'évolution, la portée nominale de chaque noeud... Un tel système informatique peut également être adapté pour émettre des signaux d'alerte en fonction de conditions prédéterminées, par exemple sur détection du fait que le nombre de noeuds de mobile est inférieur à un nombre prédéterminé, ou sur la détection d'une valeur de rang supérieure à une valeur prédéterminée,...

Il est possible d'ajouter ou de supprimer des noeuds à tout moment, y compris des noeuds de mobile, sans aucune perturbation du réseau. Il est également facile d'augmenter la portée de communication totale du réseau en ajoutant des noeuds relais (fixes ou mobiles) dans des positions (absolues par rapport à la zone d'évolution ou relatives par rapport aux différents noeuds collecteurs) appropriées et en nombre approprié, permettant de modifier le périmètre d'extension maximum du réseau.

Il est à noter que les différents noeuds peuvent être conçus de façon à permettre une allocation dynamique des types de noeuds. Par exemple, tous les noeuds peuvent être strictement identiques et dotés de fonctionnalités permettant de les transformer chacun, à la configuration initiale du réseau ou même dynamiquement au cours de son utilisation, en noeud collecteur ou au contraire en noeud de mobile non collecteur. Pour ce faire il suffit de prévoir que chaque noeud soit susceptible d'initialiser, d'élaborer et d'émettre un message 19 de gestion, puis de collecter les données de localisation à réception de messages 20 de localisation.

Les exemples ci-après sont des exemples d'applications de l'invention.

### EXEMPLE 1 :

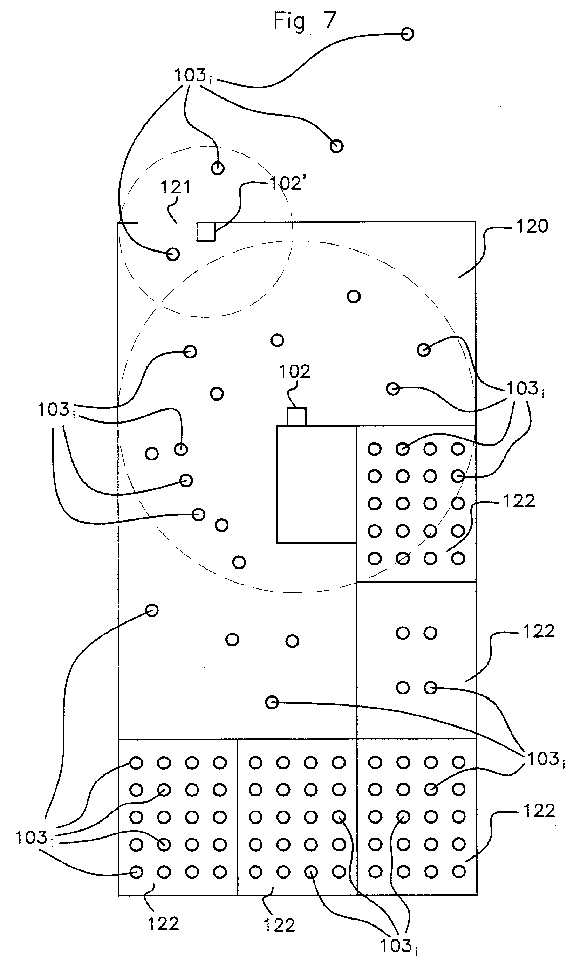

La zone d'évolution est l'enceinte d'une école, y compris la cour de récréation. La figure 7 est une illustration de cet exemple. Un premier noeud 102 collecteur est placé fixe par rapport à l'enceinte de l'école, en position de préférence plus ou moins centralisée, et avec une portée en réception schématisée par des traits pointillés sur la figure 7 inférieure à la dimension totale de la cour 120 de récréation. Un deuxième noeud 102' collecteur est disposé fixe à proximité de la porte 121 d'entrée de l'école. Chaque élève est équipé d'un noeud 103ᵢ de mobile.

L'invention permet de déterminer si les élèves, identifiés individuellement ou par groupe (c'est-à-dire notamment par classe) sont présents dans l'école et, le cas échéant, à quel endroit.

Initialement, aucun élève n'est présent dans l'école. Le premier noeud 102 collecteur ne reçoit alors aucune donnée de localisation. Lorsque des élèves attendent devant la porte 121, le deuxième noeud 102' collecteur reçoit des données de localisation de ces élèves. Lorsque les élèves commencent à rentrer dans la cour, ils sont détectés par le premier noeud 102 collecteur, au fur et à mesure, leurs données de localisation étant transmises à ce dernier. Grâce à la transmission de proche en proche des messages de gestion, puis des messages de localisation entre les noeuds des différents élèves jusqu'aux noeuds collecteurs, les élèves présents dans l'école et au voisinage de la porte 121 sont en permanence localisés, voire identifiés. À la fin de la récréation, les élèves s'organisent normalement par classes comme représenté figure 7.

Si l'on constate que les noeuds de mobile de tous les élèves d'un même groupe c'est-à-dire d'une même classe, ont tous le même rang ou des rangs voisins, cela signifie qu'ils sont ensemble. Il est possible de compter automatiquement les élèves d'un même groupe pour déterminer s'ils sont ou non présents dans la classe correspondante. Il est possible également de déterminer qu'un élève identifié par un groupe ou individuellement ayant un rang très différent des rangs des élèves de sa classe, est situé soit dans la cour de récréation soit dans un autre bâtiment ou dans une autre classe.

Dans le cas où l'enceinte présente des zones non couvertes, il est possible d'équiper un surveillant d'un noeud de mobile et de lui demander de se déplacer dans la zone non couverte, son rang pouvant faire office de noeud relais et de référence. Il est également possible d'installer un noeud fixe ou plusieurs noeuds fixes au niveau des zones non couvertes par la portée des noeuds collecteurs, de façon à assurer que l'intégralité de l'enceinte de l'école soit couverte par la portée en réception de ces différents noeuds fixes. Par exemple, il est possible (variante non représentée) de placer des noeuds fixes pour former un périmètre à surveiller, par exemple à la périphérie de la cour de récréation, voire à la périphérie de l'enceinte de l'école. La connaissance des rangs de ces noeuds fixes et de leur identification permet de déterminer si les élèves (noeuds de mobile) s'approchent ou s'éloignent du périmètre.

Il n'est pas nécessaire de prévoir un noeud collecteur pour chaque salle de classe 122, les différentes salles de classe 122 pouvant être à portée les unes des autres de proche en proche. Cela étant, rien n'empêche également de doter chaque salle de classe d'un noeud fixe collecteur, ou d'un noeud fixe non collecteur mais à portée d'un noeud collecteur, directement ou via un ou plusieurs noeud(s) fixe(s), la portée de ce noeud fixe dédié à une salle correspondant au moins à cette salle.

### EXEMPLE 2 :

Un réseau selon l'invention peut être utilisé par exemple pour localiser un groupe de personnes en déplacement, par exemple un groupe de randonneurs, accompagnées par au moins un guide. Chaque guide est équipé d'un noeud collecteur. Les autres personnes sont équipées chacune d'un noeud de mobile. Les différentes personnes peuvent être localisées au moins approximativement par rapport à chaque guide ou par rapport à au moins l'un d'entre eux.

De la même manière, un réseau selon l'invention peut être utilisé pour gérer un troupeau d'animaux, un animal dominant du troupeau étant doté d'un noeud collecteur, les autres animaux étant dotés de noeuds de mobile. On peut ainsi par exemple s'assurer que le troupeau, en pâturage libre (par exemple sur un alpage de montagne), conserve le même nombre d'animaux à portée les uns des autres. Il est aussi possible d'équiper la périphérie d'une surface de pâturage prédéterminée, clôturée ou non, de noeuds fixes, qui peuvent être pour partie ou non des noeuds collecteurs.

### EXEMPLE 3 :

Un réseau selon l'invention peut être utilisé pour gérer des véhicules de location sur des parkings sur lesquels ces véhicules peuvent se trouver. Par exemple, un premier parking a un faible nombre de places mais est situé à proximité d'une zone d'accès par les clients. D'autres parkings peuvent être plus éloignés et permettre le stockage des véhicules lorsque le premier parking est rempli. Chaque véhicule est équipé d'un noeud de mobile. Chaque parking et/ou chaque rangée d'un parking et/ou chaque ligne de deux rangées adjacentes d'un parking, peut être équipé(e) d'un noeud collecteur dont la portée correspond par exemple à environ deux places de parking, c'est-à-dire de l'ordre de 5 m de rayon. La barrière d'entrée du parking peut être également équipée d'un noeud collecteur. Le premier parking peut être aussi doté d'une caméra de surveillance permettant de détecter les places vides et les places occupées.

Si le réseau selon l'invention formé sur le premier parking détecte un nombre de véhicules supérieur au nombre de places occupées visualisées par la caméra, on peut considérer que des véhicules non autorisés (non équipés d'un noeud de mobile) sont garés gratuitement sur le parking. En outre, il est possible de prévoir que les messages de gestion envoyés à chaque noeud de mobile incorporent une commande permettant au gérant du parking de faire allumer les feux de tous les véhicules de location ainsi garés sur le premier parking, permettant de détecter immédiatement les véhicules en infraction.

En outre, le réseau selon l'invention formé sur le premier parking et/ou sur chaque autre parking éloigné, permet de connaître le nombre de véhicules, voire l'identification des véhicules sur chaque parking.

Il peut être prévu un réseau indépendant par parking ou un même réseau pour plusieurs parkings, selon la topographie des différents parkings et les besoins.

### EXEMPLE 4 :

Un réseau selon l'invention peut être utilisé également pour localiser des biens meubles (mobilier, oeuvres d'art,...) de valeur dans un bâtiment. Par exemple, il peut s'agir d'oeuvres d'art dans un musée ou dans un logement. Chaque oeuvre d'art peut être dotée d'un noeud de mobile, et le musée comporte au moins un noeud collecteur. Ainsi, chaque oeuvre d'art peut être détectée et localisée.

Rien n'empêche de prévoir que la transmission des messages entre les différents noeuds soit de plus sécurisée par un protocole de cryptage symétrique ou asymétrique. À ce titre, il est également possible d'utiliser la valeur de rang d'un noeud comme clé de cryptage. En effet, tant que les noeuds de mobile restent la même place, le cryptage fonctionne. Par contre, si l'un des biens meuble est déplacé, sa valeur de rang va changer et le cryptage ne sera plus opérationnel à partir de ce rang. Le décryptage permettra d'identifier cette erreur de cryptage et de communiquer à un noeud collecteur la localisation du noeud dont le rang a ainsi changé. Un tel cryptage dynamique assure une grande sécurité vis-à-vis des attaques par les tiers, la valeur de rang étant fournie dynamiquement et uniquement par transmission par paquets unidirectionnelle, c'est-à-dire de façon brève et ponctuelle.

L'invention peut faire l'objet de nombreuses variantes de réalisation et applications autres que celles décrites ci-dessus.

## Revendications

1. Procédé de localisation relative de mobiles dans une zone, dite zone d'évolution, dans laquelle les mobiles sont susceptibles d'évoluer, à l'aide d'un réseau à liaisons sans fil susceptible d'être établi entre des dispositifs électroniques de communication, dits noeuds, chaque mobile étant doté d'un dispositif électronique de communication, dit noeud de mobile, **caractérisé en ce que** :
- chaque noeud est adapté pour pouvoir émettre et recevoir des messages sur le réseau par liaisons sans fil,
- chaque noeud comporte un module (88) de traitement adapté pour pouvoir interpréter et modifier un message reçu,
- au moins un noeud, dit noeud (102, 102') fixe, est fixé dans ladite zone d'évolution, chaque noeud (102, 102') fixe étant adapté pour présenter une portée en réception inférieure à ladite zone d'évolution,
- chaque noeud de mobile présente une portée en réception inférieure ou égale à la portée en réception de chaque noeud (102, 102') fixe,
- au moins un noeud (102, 102') fixe, dit noeud (102, 102') collecteur étant adapté pour générer et émettre un message, dit message (19) de gestion, diffusé de proche en proche par les noeuds, chaque message (19) de gestion comportant un champ numérique, dit champ (27) de rang,
- le module (88) de traitement d'un noeud recevant un message (19) de gestion est adapté pour comparer la valeur du champ (27) de rang du message avec une valeur numérique mémorisée dans une mémoire numérique du noeud, dite mémoire (12) de rang,
- si la valeur contenue dans la mémoire (12) de rang correspond à au moins une valeur prédéterminée, dite valeur indéfinie, alors le module (88) de traitement incrémente le contenu du champ (27) de rang, met à jour le contenu de la mémoire (12) de rang avec le contenu du champ (27) de rang incrémenté, et retransmet le message (19) de gestion,
- le module (88) de traitement d'un noeud recevant un message (19) de gestion est adapté pour, si la valeur contenue dans la mémoire (12) de rang appartient à l'ensemble formé des valeurs supérieures au contenu du champ (27) de rang, incrémenter le contenu du champ (27) de rang, mettre à jour le contenu de la mémoire (12) de rang avec le contenu du champ (27) de rang incrémenté, et retransmettre le message (19) de gestion,
- le module (88) de traitement d'un noeud recevant un message (19) de gestion est adapté pour ignorer le message de gestion, si la valeur contenue dans la mémoire (12) de rang appartient à l'ensemble formé des valeurs inférieures au contenu du champ (27) de rang,
- au moins un message (20) de localisation est émis à partir d'un noeud source à destination d'au moins un noeud (102, 102') collecteur via une série de noeuds (103ᵢ) de rangs successifs générés par diffusion préalable d'un message (19) de gestion à partir dudit noeud (102, 102') collecteur jusqu'audit noeud source, ce message (21) de localisation contenant des données, dites données de localisation, comprenant au moins un code d'identification individuelle et/ou collective de chaque noeud (103ᵢ) par lequel il transite depuis ledit noeud source, jusqu'audit noeud (102, 102') collecteur, et la valeur de rang, contenue dans la mémoire (12) de rang de ce noeud (103ᵢ), par rapport audit noeud (102, 102') collecteur, l'émission de chaque message (20) de localisation étant adaptée pour que les données de localisation de chaque noeud de mobile appartenant au réseau soient transmises à au moins un noeud collecteur.

2. Procédé selon la revendication 1, **caractérisé en ce qu'**au moins un noeud fixe est placé dans la zone d'évolution dans la zone de portée en réception d'au moins un noeud (102, 102') collecteur.

3. Procédé selon l'une des revendications 1 ou 2, **caractérisé en ce que** la zone d'évolution est une zone bidimensionnelle et est dotée d'une pluralité de noeuds fixes répartis de sorte que chaque noeud fixe présente une portée en réception limitée pour couvrir au maximum quatre autres noeuds fixes adjacents situés dans la zone d'évolution.

4. Procédé selon l'une des revendications 1 à 3, **caractérisé en ce que** la zone d'évolution est dotée d'une pluralité de noeuds fixes répartis de sorte que la zone d'évolution est totalement couverte par l'enveloppe des portées de réception des noeuds fixes.

5. Procédé selon l'une des revendications 1 à 4, **caractérisé en ce que** ledit noeud source est choisi parmi : un noeud destinataire identifié dans ledit message (19) de gestion ; un noeud terminal à partir duquel ledit message (19) de gestion cesse d'être diffusé, aucun noeud à portée de ce noeud terminal ayant une valeur contenue dans sa mémoire de rang correspondant à une valeur indéfinie ou appartenant à l'ensemble des valeurs supérieures au champ de rang dudit message (19) de gestion ; chaque noeud dont la valeur de mémoire (12) de rang a été précédemment modifiée.

6. Procédé selon l'une des revendications 1 à 5, **caractérisé en ce que** :
- chaque noeud comprend un dispositif de mesure d'au moins un paramètre représentatif de la qualité de la transmission de chaque message qu'il reçoit, ce dispositif de mesure générant au moins une valeur, dite valeur de qualité de transmission,
- lorsqu'un noeud (103ᵢ) reçoit un message (19) de gestion dont la valeur de champ de rang est égale à celle de la mémoire (12) de rang, le module (88) de traitement est adapté pour :
- comparer chaque valeur de qualité de transmission correspondant à ce message (19) de gestion avec au moins un critère prédéterminé choisi de façon à détecter une amélioration prédéterminée de la qualité de transmission,
- si une telle amélioration est détectée, incrémenter le contenu du champ (27) de rang, mettre à jour le contenu de la mémoire (12) de rang avec le contenu du champ (27) de rang incrémenté, et retransmettre le message (19) de gestion.

7. Procédé selon la revendication 6, **caractérisé en ce que** chaque valeur de qualité de transmission correspondant à un message reçu est mémorisée dans une mémoire du noeud, et **en ce que** le module (88) de traitement est adapté pour comparer chaque valeur de qualité de transmission correspondant à un message (19) de gestion reçu avec la valeur de qualité de transmission préalablement mémorisée et, si le résultat de cette comparaison est représentatif d'une différence de valeurs supérieure à une valeur seuil prédéterminée correspondant à une amélioration prédéterminée de la qualité de transmission, incrémenter le contenu du champ (27) de rang, mettre à jour le contenu de la mémoire (12) de rang avec le contenu du champ (27) de rang incrémenté, et retransmettre le message (19) de gestion.

8. Procédé selon l'une des revendications 6 ou 7, **caractérisé en ce que** le module (88) de traitement de chaque noeud (102) est adapté pour :
- incorporer dans chaque message (19) de gestion qu'il émet, un champ numérique, dit instant d'émission, correspondant à l'instant auquel il émet le message de gestion,
- déterminer l'instant de réception de chaque message de gestion qu'il reçoit dont la valeur de champ de rang est égale à celle de la mémoire (12) de rang, et le comparer à l'instant d'émission incorporé dans le message de gestion,
- si le résultat de cette comparaison est représentatif d'une différence temporelle, représentative d'une durée de transmission, inférieure à une valeur de comparaison, incrémenter le contenu du champ (27) de rang, mettre à jour le contenu de la mémoire (12) de rang avec le contenu du champ (27) de rang incrémenté, et retransmettre le message (19) de gestion.

9. Procédé selon la revendication 8, **caractérisé en ce que** ladite valeur de comparaison correspond à la durée de transmission mémorisée du précédent message (19) de gestion reçu diminuée d'une valeur seuil prédéterminée.

10. Procédé selon la revendication 6 et l'une des revendications 1 à 9, **caractérisé en ce que** chaque noeud comprend un dispositif de mesure du niveau de signal de réception de chaque message qu'il reçoit, et lorsqu'un noeud (103ᵢ) reçoit un message (19) de gestion dont la valeur de champ de rang est égale à celle de la mémoire (12) de rang, le module (88) de traitement est adapté pour comparer le niveau du signal de réception avec une valeur prédéterminée, dite valeur de comparaison, puis, si le résultat de cette comparaison est représentatif d'une différence de niveaux supérieure à une valeur seuil, incrémenter le contenu du champ (27) de rang, mettre à jour le contenu de la mémoire (12) de rang avec le contenu du champ (27) de rang incrémenté, et retransmettre le message (19) de gestion.

11. Procédé selon la revendication 10, **caractérisé en ce que** ladite valeur de comparaison est le niveau mémorisé du signal de réception du précédent message reçu.

12. Réseau à liaisons sans fil permettant la localisation relative de mobiles dans une zone, dite zone d'évolution, dans laquelle les mobiles sont susceptibles d'évoluer, ledit réseau étant susceptible d'être établi entre des dispositifs électroniques de communication, dits noeuds, chaque mobile étant doté d'un dispositif électronique de communication, dit noeud de mobile, **caractérisé en ce que** :
- chaque noeud comprend un émetteur (5) et un récepteur (6) de messages sur le réseau par liaisons sans fil,
- chaque noeud comprend un module (88) de traitement adapté pour pouvoir interpréter et modifier un message reçu,
- au moins un noeud, dit noeud (102, 102') fixe, est fixé dans ladite zone d'évolution, chaque noeud (102, 102') fixe étant adapté pour présenter une portée en réception inférieure à ladite zone d'évolution,
- chaque noeud de mobile présente une portée en réception inférieure ou égale à la portée en réception de chaque noeud (102, 102') fixe,
- au moins un noeud fixe, dit noeud (102, 102') collecteur, étant adapté pour générer et émettre un message, dit message (19) de gestion, diffusé de proche en proche par les noeuds, chaque message (19) de gestion comportant un champ numérique, dit champ (27) de rang,
- le module (88) de traitement d'un noeud de mobile recevant un message (19) de gestion est adapté pour comparer la valeur du champ (27) de rang du message avec une valeur numérique mémorisée dans une mémoire numérique du noeud, dite mémoire (12) de rang,
- si la valeur contenue dans la mémoire (12) de rang correspond à au moins une valeur prédéterminée, dite valeur indéfinie, alors le module (88) de traitement est adapté pour incrémenter la valeur du champ (27) de rang, mettre à jour le contenu de la mémoire (12) de rang avec le contenu du champ (27) de rang incrémenté, et retransmettre le message (19) de gestion,
- le module (88) de traitement d'un noeud recevant un message de gestion est adapté pour, si la valeur contenue dans la mémoire (12) de rang appartient à l'ensemble formé des valeurs supérieures au contenu du champ (27) de rang, incrémenter le contenu du champ (27) de rang, mettre à jour le contenu de la mémoire (12) de rang avec le contenu du champ (27) de rang incrémenté, et retransmettre le message (19) de gestion,
- le module (88) de traitement d'un noeud recevant un message (19) de gestion est adapté pour ignorer le message de gestion, si la valeur contenue dans la mémoire (12) de rang appartient à l'ensemble formé des valeurs inférieures au contenu du champ (27) de rang,
- le module (88) de traitement d'au moins un noeud, dit noeud source, est adapté pour générer et émettre, à destination d'au moins un noeud (102, 102') collecteur via une série de noeuds (103ᵢ) de rangs successifs générés par diffusion préalable d'un message (19) de gestion à partir dudit noeud (102, 102') collecteur jusqu'audit noeud source, un message (20) de localisation contenant des données, dites données de localisation, comprenant au moins un code d'identification individuelle et/ou collective de chaque noeud (103ᵢ) par lequel il transite depuis ledit noeud source, jusqu'audit noeud (102, 102') collecteur, et la valeur de rang, contenue dans la mémoire (12) de rang de ce noeud (103ᵢ), par rapport audit noeud (102, 102') collecteur, l'émission de chaque message (20) de localisation étant adaptée pour que les données de localisation de chaque noeud de mobile appartenant au réseau soient transmises à au moins un noeud collecteur.

13. Réseau selon la revendication 12, **caractérisé en ce qu'**au moins un noeud fixe est placé dans la zone de portée en réception d'au moins un noeud (102, 102') collecteur.

14. Réseau selon l'une des revendications 12 ou 13, **caractérisé en ce que** la zone d'évolution est dotée d'une pluralité de noeuds fixes répartis de sorte que chaque noeud fixe à une portée limitée pour couvrir au maximum deux autres noeuds fixes situés dans la zone d'évolution.

15. Réseau selon l'une des revendications de 12 à 14, **caractérisé en ce que** la zone d'évolution est dotée d'une pluralité de noeuds fixes répartis de sorte que la zone d'évolution est totalement couverte par les portées de réception des noeuds fixes.

16. Réseau selon l'une des revendications 12 à 15, **caractérisé en ce que** les mobiles sont des terminaux aptes à être portés par des êtres vivants ou des objets.

## Patentansprüche

1. Verfahren zur relativen Lokalisierung von beweglichen Körpern in einem Gebiet, dem sogenannten Bewegungsgebiet, in dem sich die beweglichen Körper möglicherweise bewegen, mithilfe eines Netzwerks, das aus drahtlosen Verbindungen besteht und das zwischen elektronischen Kommunikationsgeräten, Knoten genannt, möglicherweise aufgebaut wird, wobei jeder bewegliche Körper mit einem elektronischen Kommunikationsgerät, Knoten eines beweglichen Körpers genannt, ausgestattet ist, **dadurch gekennzeichnet, dass**:
- jeder Knoten dafür geeignet ist, Nachrichten über das Drahtlosnetz zu senden und zu empfangen,
- jeder Knoten über ein Verarbeitungsmodul (88) verfügt, das dafür geeignet ist, eine empfangene Nachricht auszuwerten und zu modifizieren,
- mindestens ein Knoten, fester Knoten (102, 102') genannt, in dem Bewegungsgebiet fest angebracht ist, wobei jeder feste Knoten (102, 102') dafür geeignet ist, eine Empfangsreichweite aufzuweisen, die kleiner ist als das Bewegungsgebiet,
- jeder Knoten eines beweglichen Körpers eine Empfangsreichweite aufweist, die kleiner oder gleich der Empfangsreichweite jedes festen Knotens (102, 102') ist,
- mindestens ein fester Knoten (102, 102'), Sammelknoten (102, 102') genannt, dafür geeignet ist, eine Nachricht, Verwaltungsnachricht (19) genannt, zu erzeugen und zu senden, die von den Knoten von einem zum nächsten verbreitet wird, wobei jede Verwaltungsnachricht (19) ein numerisches Feld, Rangfeld (27) genannt, enthält,
- das Verarbeitungsmodul (88) eines Knotens, der eine Verwaltungsnachricht (19) empfängt, dafür geeignet ist, den Wert des Rangfelds (27) der Nachricht mit einem Zahlenwert zu vergleichen, der in einem Zahlenspeicher des Knotens, Rangspeicher (12) genannt, gespeichert ist,
- wenn der im Rangspeicher (12) enthaltene Wert mindestens einem festgelegten Wert, undefinierter Wert genannt, entspricht, inkrementiert das Verarbeitungsmodul (88) den Inhalt des Rangfelds (27), aktualisiert den Inhalt des Rangspeichers (12) mit dem inkrementierten Inhalt des Rangfelds (27) und sendet die Verwaltungsnachricht (19) weiter,
- das Verarbeitungsmodul (88) eines Knotens, der eine Verwaltungsnachricht (19) empfängt, dafür geeignet ist, wenn der im Rangspeicher (12) enthaltene Wert zur Gesamtheit der Werte gehört, die höher sind als der Inhalt des Rangfelds (27), den Inhalt des Rangfelds (27) zu inkrementieren, den Inhalt des Rangspeichers (12) mit dem Inhalt des inkrementierten Rangfeldes (27) zu aktualisieren und die Verwaltungsnachricht (19) weiterzusenden,
- das Verarbeitungsmodul (88) eines Knotens, der eine Verwaltungsnachricht (19) empfängt, dafür geeignet ist, die Verwaltungsnachricht zu ignorieren, wenn der im Rangspeicher (12) enthaltene Wert zur Gesamtheit der Werte gehört, die niedriger sind als der Inhalt des Rangfelds (27),
- mindestens eine Lokalisierungsnachricht (20) von einem Quellknoten über eine Reihe aufeinander folgender Rangknoten (103ᵢ), die durch die vorherige Verbreitung einer Verwaltungsnachricht (19) von dem genannten Sammelknoten (102, 102') aus bis zum Quellknoten gebildet wird, an mindestens einen Sammelknoten (102, 102') gesendet wird, wobei diese Lokalisierungsnachricht (21) Daten enthält, Lokalisierungsdaten genannt, die mindestens einen individuellen und/oder kollektiven Identifikationscode für jeden Knoten (103ᵢ) enthalten, über den sie von dem Quellknoten aus bis zum Sammelknoten (102, 102') läuft, sowie den Rangwert, der in dem Rangspeicher (12) dieses Knotens (103ᵢ) enthalten ist, in Bezug auf den genannten Sammelknoten (102, 102') können mit jeder Sendung einer Lokalisierungsnachricht (20) die Lokalisierungsdaten jedes Knotens beweglicher Körper, der zum Netzwerk gehört, an mindestens eines Sammelknoten gesendet werden.

2. Verfahren nach Anspruch 1, **dadurch gekennzeichnet, dass** mindestens ein fester Knoten im Bewegungsgebiet im Gebiet der Empfangsreichweite von mindestens einem Sammelknoten (102, 102') platziert ist.

3. Verfahren nach Anspruch 1 oder 2, **dadurch gekennzeichnet, dass** das Bewegungsgebiet ein zweidimensionales Gebiet ist und über eine Mehrzahl von festen Knoten verfügt, die auf eine solche Weise verteilt sind, dass jeder feste Knoten eine beschränkte Empfangsreichweite aufweist, um maximal vier benachbarte feste Knoten im Bewegungsgebiet abzudecken.

4. Verfahren nach einem der Ansprüche 1 bis 3, **dadurch gekennzeichnet, dass** das Bewegungsgebiet über eine Mehrzahl von festen Knoten verfügt, die auf eine solche Weise verteilt sind, dass das Bewegungsgebiet vollständig durch die Empfangsbereiche der festen Knoten abgedeckt ist.

5. Verfahren nach einem der Ansprüche 1 bis 4, **dadurch gekennzeichnet, dass** der genannte Quellknoten ausgewählt wird unter: einem Zielknoten, der in der genannten Verwaltungsnachricht (19) identifiziert ist; einem Endknoten, ab dem die genannte Verwaltungsnachricht (19) nicht weiter verbreitet wird, wobei kein Knoten in Reichweite dieses Endknotens in seinem Rangspeicher einen undefinierten Wert oder einen Wert enthält, der zur Gesamtheit der Werte gehört, die höher sind als das Rangfeld der genannten Verwaltungsnachricht (19); allen Knoten, deren Wert im Rangspeicher (12) zuvor modifiziert wurde.

6. Verfahren nach einem der Ansprüche 1 bis 5, **dadurch gekennzeichnet, dass**:
- jeder Knoten über eine Vorrichtung zur Messung von mindestens einem Parameter verfügt, der die Übertragungsqualität jeder Nachricht, die er empfängt, darstellt, wobei diese Messvorrichtung mindestens einen Wert, Übertragungsqualitätswert genannt, erzeugt,
- wenn ein Knoten (103ᵢ) eine Verwaltungsnachricht (19) empfängt, deren Wert im Rangfeld gleich dem Wert im Rangspeicher (12) ist, das Verarbeitungsmodul (88) für Folgendes geeignet ist:
-- jeden Übertragungsqualitätswert dieser Verwaltungsnachricht (19) mit mindestens einem festgelegten Kriterium zu vergleichen, das so ausgewählt ist, dass eine festgelegte Verbesserung der Übertragungsqualität erkannt wird,
-- wenn eine Verbesserung der Übertragungsqualität erkannt wird, den Inhalt des Rangfelds (27) zu inkrementieren, den Inhalt des Rangspeichers (12) mit dem inkrementierten Inhalt des Rangfelds (27) zu aktualisieren und die Verwaltungsnachricht (19) weiterzusenden.

7. Verfahren nach Anspruch 6, **dadurch gekennzeichnet, dass** jeder Übertragungsqualitätswert für eine empfangene Nachricht in einem Speicher des Knotens gespeichert wird und dass das Verarbeitungsmodul (88) dafür geeignet ist, jeden Übertragungsqualitätswert einer empfangenen Verwaltungsnachricht (19) mit dem zuvor gespeicherten Übertragungsqualitätswert zu vergleichen und, wenn bei diesem Vergleich eine Differenz von Werten herauskommt, die über einem festgelegten Schwellwert liegt, der einer festgelegten Verbesserung der Übertragungsqualität entspricht, den Inhalt des Rangfelds (27) zu inkrementieren, den Inhalt des Rangspeichers (12) mit dem inkrementierten Inhalt des Rangfelds (27) zu aktualisieren und die Verwaltungsnachricht (19) weiterzusenden.

8. Verfahren nach Anspruch 6 oder 7, **dadurch gekennzeichnet, dass** das Verarbeitungsmodul (88) jedes Knotens (102) für Folgendes geeignet ist:
- in jede Verwaltungsnachricht (19), die es sendet, ein Zahlenfeld einzufügen, das Sendezeitpunkt genannt wird und das dem Zeitpunkt entspricht, zu dem das Verarbeitungsmodul die Verwaltungsnachricht sendet,
- den Empfangszeitpunkt jeder Verwaltungsnachricht zu bestimmen, die es empfängt, dessen Wert im Rangfeld gleich dem Wert im Rangspeicher (12) ist, und diesen mit dem Sendezeitpunkt in der Verwaltungsnachricht zu vergleichen,
- wenn das Ergebnis dieses Vergleichs eine Zeitdifferenz ist, die die Übertragungsdauer repräsentiert und kleiner ist als ein Vergleichswert, den Inhalt des Rangfelds (27) zu inkrementieren, den Inhalt des Rangspeichers (12) mit dem inkrementierten Inhalt des Rangfelds (27) zu aktualisieren und die Verwaltungsnachricht (19) weiterzusenden.

9. Verfahren nach Anspruch 8, **dadurch gekennzeichnet, dass** der genannte Vergleichswert der gespeicherten Übertragungsdauer der zuvor empfangenen Verwaltungsnachricht (19) minus einem festgelegten Schwellwert entspricht.

10. Verfahren nach Anspruch 6 und einem der Ansprüche 1 bis 9, **dadurch gekennzeichnet, dass** jeder Knoten über eine Vorrichtung zur Messung der Stärke des Empfangssignals jeder Nachricht verfügt, die er empfängt, und dass, wenn ein Knoten (103ᵢ) eine Verwaltungsnachricht (19) empfängt, deren Wert im Rangfeld gleich dem Wert im Rangspeicher (12) ist, das Verarbeitungsmodul (88) dafür geeignet ist, die Stärke des Empfangssignals mit einem festgelegten Wert, Vergleichswert genannt, zu vergleichen; dann, falls das Ergebnis dieses Vergleichs eine Differenz ist, die größer als ein Schwellwert ist, den Inhalt des Rangfelds (27) zu inkrementieren, den Inhalt des Rangspeichers (12) mit dem inkrementierten Inhalt des Rangfelds (27) zu aktualisieren und die Verwaltungsnachricht (19) weiterzusenden.

11. Verfahren nach Anspruch 10, **dadurch gekennzeichnet, dass** der genannte Vergleichswert die gespeicherte Stärke des Empfangssignals der zuvor empfangenen Nachricht ist.

12. Netzwerk mit drahtlosen Verbindungen, das die relative Lokalisierung beweglicher Körper in einem Gebiet, Bewegungsgebiet genannt, ermöglicht, in dem sich die beweglichen Körper bewegen, wobei das genannte Netzwerk zwischen elektronischen Kommunikationsgeräten, Knoten genannt, hergestellt wird, wobei jeder bewegliche Körper mit einem elektronischen Kommunikationsgerät, Knoten eines beweglichen Körpers genannt, ausgestattet ist, **dadurch gekennzeichnet, dass**:
- jeder Knoten über einen Sender (5) und einen Empfänger (6) für Nachrichten über das drahtlose Netzwerk verfügt,
- jeder Knoten über ein Verarbeitungsmodul (88) verfügt, das dafür geeignet ist, eine empfangene Nachricht auszuwerten und zu modifizieren;
- mindestens ein Knoten, fester Knoten (102, 102') genannt, in dem Bewegungsgebiet fest angebracht ist, wobei jeder feste Knoten (102, 102') dafür geeignet ist, eine Empfangsreichweite aufzuweisen, die kleiner ist als das Bewegungsgebiet,
- jeder Knoten eines beweglichen Körpers eine Empfangsreichweite aufweist, die kleiner oder gleich der Empfangsreichweite jedes festen Knotens (102, 102') ist,
- mindestens ein fester Knoten, Sammelknoten (102, 102') genannt, dafür geeignet ist, eine Nachricht, Verwaltungsnachricht (19) genannt, zu erzeugen und zu senden, wobei sie von den Knoten von einem zum nächsten verbreitet wird, wobei jede Verwaltungsnachricht (19) ein numerisches Feld, Rangfeld (27) genannt, enthält,
- das Verarbeitungsmodul (88) eines Knoten eines beweglichen Körpers, der eine Verwaltungsnachricht (19) empfängt, dafür geeignet ist, den Wert des Rangfelds (27) der Nachricht mit einem Zahlenwert zu vergleichen, der in einem Zahlenspeicher des Knotens, Rangspeicher (12) genannt, gespeichert ist,
- wenn der im Rangspeicher (12) enthaltene Wert mindestens einem festgelegten Wert, undefinierter Wert genannt, entspricht, das Verarbeitungsmodul (88) dafür geeignet ist, den Inhalt des Rangfelds (27) zu inkrementieren, den Inhalt des Rangspeichers (12) mit dem inkrementierten Inhalt des Rangfelds (27) zu aktualisieren und die Verwaltungsnachricht (19) weiterzusenden,
- das Verarbeitungsmodul (88) eines Knotens, der eine Verwaltungsnachricht empfängt, dafür geeignet ist, wenn der im Rangspeicher (12) enthaltene Wert zur Gesamtheit der Werte gehört, die höher sind als der Inhalt des Rangfelds (27), den Inhalt des Rangfelds (27) zu inkrementieren, den Inhalt des Rangspeichers (12) mit dem Inhalt des inkrementierten Rangfeldes (27) zu aktualisieren und die Verwaltungsnachricht (19) weiterzusenden,
- das Verarbeitungsmodul (88) eines Knotens, der eine Verwaltungsnachricht (19) empfängt, dafür geeignet ist, die Verwaltungsnachricht zu ignorieren, wenn der im Rangspeicher (12) enthaltene Wert zur Gesamtheit der Werte gehört, die niedriger sind als der Inhalt des Rangfelds (27),
- das Verarbeitungsmodul (88) von mindestens einem Knoten, Quellknoten genannt, dafür geeignet ist, an mindestens einen Sammelknoten (102, 102') über eine Reihe aufeinander folgender Rangknoten (103ᵢ), die durch die vorherige Verbreitung einer Verwaltungsnachricht (19) von dem genannten Sammelknoten (102, 102') aus bis zum Quellknoten gebildet wird, eine Lokalisierungsnachricht (20) zu erzeugen und zu senden, die Daten, Lokalisierungsdaten genannt, enthält, die mindestens einen individuellen und/oder kollektiven Identifikationscode für jeden Knoten (103ᵢ) umfassen, über den sie von dem genannten Quellknoten aus bis zum genannten Sammelknoten (102, 102') läuft, sowie den Rangwert, der in dem Rangspeicher (12) dieses Knotens (103ᵢ) enthalten ist, in Bezug auf den genannten Sammelknoten (102, 102') können mit jeder Sendung einer Lokalisierungsnachricht (20) die Lokalisierungsdaten jedes Knotens beweglicher Körper, der zum Netzwerk gehört, an mindestens eines der Sammelknoten gesendet werden.

13. Verfahren nach Anspruch 12, **dadurch gekennzeichnet, dass** mindestens ein fester Knoten im Gebiet der Empfangsreichweite von mindestens einem Sammelknoten (102, 102') platziert ist.

14. Netzwerk nach Anspruch 12 oder 13, **dadurch gekennzeichnet, dass** das Bewegungsgebiet mit einer Mehrzahl von festen Knoten ausgestattet ist, die auf eine solche Weise verteilt sind, dass jeder feste Knoten eine beschränkte Reichweite hat, sodass maximal zwei andere feste Knoten im Bewegungsgebiet abgedeckt sind.

15. Netzwerk gemäß einem der Ansprüche von 12 bis 14, das **dadurch gekennzeichnet ist, dass** das Bewegungsgebiet mit einer Mehrzahl von festen Knoten ausgestattet ist, die auf eine solche Weise verteilt sind, dass das Bewegungsgebiet vollständig durch die Empfangsbereiche der festen Knoten abgedeckt ist.

16. Netzwerk nach einem der Ansprüche 12 bis 15, **dadurch gekennzeichnet, dass** die beweglichen Körper Endgeräte sind, die von lebendigen Wesen oder von Objekten getragen werden können.

## Claims

1. Method for the relative location of mobiles in a zone, named the evolution zone, wherein the mobiles are capable of evolving, using a wireless link network capable of being established between electronic communication devices, named nodes, each mobile being equipped with an electronic communication device, named mobile node, **characterised in that**:
- each node is designed to be able to transmit and receive messages over the wireless link network,
- each node comprises a processing module (88) designed to be able to interpret and modify a message received,
- at least one node, named fixed node (102, 102'), is secured within said evolution zone, each fixed node (102, 102') being designed to have a receiving range of less than said evolution zone,
- each mobile node has a receiving range of less than or equal to the receiving range of each fixed node (102, 102'),
- at least one fixed node (102, 102'), named collector node (102, 102'), being designed to generate and transmit a message, named management message (19), distributed step by step by the nodes, each management message (19) comprising a digital field, named rank field (27),
- the processing module (88) of a node receiving a management message (19) is designed to compare the value of the rank field (27) of the message with a digital value stored in a digital memory of the node, named rank memory (12),
- if the value contained in the rank memory (12) corresponds to at least one predetermined value, named undefined value, the processing module (88) then increments the content of the rank field (27), updates the content of the rank memory (12) with the content of the incremented rank field (27), and re-transmits the management message (19),
- the processing module (88) of a node receiving a management message (19) is designed such that, if the value contained in the rank memory (12) belongs to the series formed by the values that are greater than the content of the rank field (27), it increments the content of the rank field (27), updates the content of the rank memory (12) with the content of the incremented rank field (27), and re-transmits the management message (19),
- the processing module (88) of a node receiving a management message (19) is designed to ignore the management message if the value contained in the rank memory (12) belongs to the series formed by the values that are less than the content of the rank field (27),
- at least one locating message (20) is transmitted from a source node to at least one collector node (102, 102') via a series of nodes (103ᵢ) of successive ranks generated by the prior distribution of a management message (19) from said collector node (102, 102') to said source node, this locating message (21) containing data, named location data, comprising at least one individual and/or collective identification code for each node (103ᵢ) through which it transits from said source node to said collector node (102, 102'), and the rank value, contained in the rank memory (12) of said node (103ᵢ), in relation to said collector node (102, 102'), the transmission of each locating message (20) being designed such that the location data of each mobile node belonging to the network is transmitted to at least one collector node.

2. Method according to claim 1, **characterised in that** at least one fixed node is positioned in the evolution zone within the receiving range of at least one collector node (102, 102').

3. Method according to one of claims 1 or 2, **characterised in that** the evolution zone is a two-dimensional zone and is equipped with a plurality of fixed nodes distributed such that each fixed node has a limited receiving range to cover at most four other adjacent fixed nodes located in the evolution zone.

4. Method according to one of claims 1 to 3, **characterised in that** the evolution zone is equipped with a plurality of fixed nodes distributed such that the evolution zone falls completely within the coverage of the receiving ranges of the fixed nodes.

5. Method according to one of claims 1 to 4, **characterised in that** said source node is chosen from among: a recipient node identified in said management message (19); a terminal node from which said management message (19) stops being distributed, whereby no node within the range of said terminal node has a value contained in its rank memory corresponding to an undefined value or a value belonging to the series of the values that are greater than the rank field of said management message (19); each node whose rank memory (12) value has been previously modified.

6. Method according to one of claims 1 to 5, **characterised in that**:
- each node comprises a measuring device for measuring at least one parameter representative of the quality of the transmission of each message it receives, said measuring device generating at least one value, named transmission quality value,
- when a node (103ᵢ) receives a management message (19), the rank field value of which is equal to that of the rank memory (12), the processing module (88) is designed to:
-- compare each transmission quality value corresponding to said management message (19) with at least one predetermined criterion chosen so as to detect a predetermined improvement in the transmission quality,
-- if such an improvement is detected, increment the content of the rank field (27), update the content of the rank memory (12) with the content of the incremented rank field (27), and retransmit the management message (19).

7. Method according to claim 6, **characterised in that** each transmission quality value corresponding to a message received is stored in a memory of the node, and **in that** the processing module (88) is designed to compare each transmission quality value corresponding to a management message (19) received with the transmission quality value previously stored in memory and, if the result of this comparison is representative of a difference in values that is greater than a predetermined threshold value corresponding to a predetermined improvement in the transmission quality, to increment the content of the rank field (27), update the content of the rank memory (12) with the content of the incremented rank field (27), and retransmit the management message (19).

8. Method according to one of claims 6 or 7, **characterised in that** the processing module (88) of each node (102) is designed to:
- incorporate in each management message (19) that it transmits, a digital field, named transmission time, corresponding to the time at which it transmits the management message,
- determine the receipt time of each management message that it receives, the rank field value of which is equal to that of the rank memory (12), and compare it to the transmission time incorporated into the management message,
- if the result of this comparison is representative of a time difference, representative of a transmission duration, less than a comparison value, increment the content of the rank field (27), update the content of the rank memory (12) with the content of the incremented rank field (27), and retransmit the management message (19).

9. Method according to claim 8, **characterised in that** said comparison value corresponds to the transmission duration stored in memory for the previous management message (19) received, reduced by a predetermined threshold value.

10. Method according to claim 6 and according to one of claims 1 to 9, **characterised in that** each node comprises a measuring device for measuring the reception signal level of each message that it receives, and if a node (103ᵢ) receives a management message (19), the rank field value of which is equal to that of the rank memory (12), the processing module (88) is designed to compare the reception signal level with a predetermined value, named comparison value, then, if the result of this comparison is representative of a difference in levels that exceeds a threshold value, increment the content of the rank field (27), update the content of the rank memory (12) with the content of the incremented rank field (27), and retransmit the management message (19).

11. Method according to claim 10, **characterised in that** said comparison value is the level stored in memory of the reception signal of the previous message received.

12. Wireless link network allowing for the relative location of mobiles in a zone, named the evolution zone, wherein the mobiles are capable of evolving, said network being capable of being established between electronic communication devices, named nodes, each mobile being equipped with an electronic communication device, named mobile node, **characterised in that**:
- each node comprises a transmitter (5) and a receiver (6) for messages over the wireless link network,
- each node includes a processing module (88) designed to be able to interpret and modify a message received,
- at least one node, named fixed node (102, 102'), is secured within said evolution zone, each fixed node (102, 102') being designed to have a receiving range of less than said evolution zone,
- each mobile node has a receiving range of less than or equal to the receiving range of each fixed node (102, 102'),
- at least one fixed node, named collector node (102, 102'), being designed to generate and transmit a message, named management message (19), distributed step by step by the nodes, each management message (19) comprising a digital field, named rank field (27),
- the processing module (88) of a mobile node receiving a management message (19) is designed to compare the value of the rank field (27) of the message with a digital value stored in a digital memory of the node, named rank memory (12),
- if the value contained in the rank memory (12) corresponds to at least one predetermined value, named undefined value, the processing module (88) is designed to increment the rank field (27) value, update the content of the rank memory (12) with the content of the incremented rank field (27), and re-transmit the management message (19),
- the processing module (88) of a node receiving a management message is designed such that, if the value contained in the rank memory (12) belongs to the series formed by the values that are greater than the content of the rank field (27), it increments the content of the rank field (27), updates the content of the rank memory (12) with the content of the incremented rank field (27), and re-transmits the management message (19),
- the processing module (88) of a node receiving a management message (19) is designed to ignore the management message if the value contained in the rank memory (12) belongs to the series formed by the values that are less than the content of the rank field (27),
- the processing module (88) of at least one node, named source node, is designed to generate and transmit, to at least one collector node (102, 102') via a series of nodes (103ᵢ) of successive ranks generated by the prior distribution of a management message (19) from said collector node (102, 102') to said source node, a locating message (20) containing data, named location data, comprising at least one individual and/or collective identification code for each node (103ᵢ) through which it transits from said source node to said collector node (102, 102'), and the rank value, contained in the rank memory (12) of said node (103ᵢ), in relation to said collector node (102, 102'), the transmission of each locating message (20) being designed such that the location data of each mobile node belonging to the network is transmitted to at least one collector node.

13. Network according to claim 12, **characterised in that** at least one fixed node is positioned within the receiving range of at least one collector node (102, 102').

14. Network according to one of claims 12 or 13, **characterised in that** the evolution zone is equipped with a plurality of fixed nodes distributed such that each fixed node has a limited receiving range to cover at most two other fixed nodes located in the evolution zone.

15. Network according to one of claims 12 to 14, **characterised in that** the evolution zone is equipped with a plurality of fixed nodes distributed such that the evolution zone falls completely within the receiving ranges of the fixed nodes.

16. Network according to one of claims 12 to 15, **characterised in that** the mobiles are terminals capable of being carried by human beings or objects.
